(19) **Europäisches Patentamt / European Patent Office / Office européen des brevets**

(11) **EP 4 715 023 A1**

(12) **EUROPEAN PATENT APPLICATION**

(43) Date of publication:
**25.03.2026   Bulletin 2026/13**

(21) Application number: **24201413.2**

(22) Date of filing: **19.09.2024**

(51) International Patent Classification (IPC):
**C09K 5/04** *(2006.01)*      **H01M 10/6569** *(2014.01)*
**C10M 101/00** *(2006.01)*

(52) Cooperative Patent Classification (CPC):
**C09K 5/048; H01M 10/625; H01M 10/6569;**
H01M 2220/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ExxonMobil Technology and
Engineering Company
Spring, TX 77389 (US)**

(72) Inventors:
 • **BRAUN, Heinrich, R.**
  **93464 Tiefenbach Oberpf. (DE)**
 • **BEHROUZ, Engheta**
  **20149 Hamburg (DE)**
 • **KLANDE, Tobias**
  **21423 Winsen (Luhe) (DE)**
 • **BIEN, Daniel**
  **53424 Remagen (DE)**

(74) Representative: **ExxonMobil Petroleum &
Chemical BV
IP Law Europe
Hermeslaan 2
1831 Machelen (BE)**

(54) **HEAT TRANSFER FLUID**

(57)      A heat transfer fluid for electric vehicle applications, wherein the heat transfer fluid is a dielectric fluid configured to transfer heat in direct contact with live parts, the heat transfer fluid comprises at least 20 wt% of a first component based on the total weight of the heat transfer fluid, and at least 1 wt% and up to 80 wt% of a second component based on the total weight of the heat transfer fluid, wherein the first component has a kinematic viscosity KV 20 ≤ 50.0mm$^2$/s, a kinematic viscosity KV 100 ≤ 10.0mm$^2$/s, and an initial boiling point (IBP) ≥ 150 °C, and the second component has a kinematic viscosity KV 20 ≤ 1.0 mm$^2$/s,, wherein the KV 20 of the first component is higher than the KV 20 of the second component and a final boiling point (FBP) ≤ 100 °C,.

A method for operating a thermal management arrangement (1) for electric components (2) in electric vehicles comprises the step of providing the thermal management arrangement (1). The thermal management arrangement (1) includes a heat source in the form of an electric component (2) which is arranged in a housing (3), a cooling circuit (5) comprising an encircling fluid line (6) which is thermally coupled to the electric component (2) and a heat exchanger (7) arranged in the fluid line (6). The thermal management arrangement (1) further comprises a heat transfer fluid disposed in the fluid line (6) and a pump (8) configured for transporting the heat transfer fluid through the fluid line (6). The heat transfer fluid comprises at least 20 wt% of a first component based on the total weight of the heat transfer fluid, and at least 1 wt% and up to 80 wt% of a second component based on the total weight of the heat transfer fluid. The first component has a kinematic viscosity KV 20 ≤ 50.0 mm$^2$/s, a kinematic viscosity KV 100 ≤ 10.0mm$^2$/s, and an initial boiling point (IBP) ≥ 150 °C. The second component has a kinematic viscosity KV 20 ≤ 1.0 mm$^2$/s, , wherein the KV 20 of the first component is higher than the KV 20 of the second component and a final boiling point (FBP) ≤ 100 °C, preferably ≤ 80 °C.

The method further comprises the step of pumping the heat transfer fluid through the fluid line (6) thereby generating a mass flow (m) of the heat transfer fluid. The heat transfer fluid enters the housing (3) of the electric component (2) at a first fluid temperature ($T_1$) and exits the housing (3) of the electric component at a second fluid temperature ($T_2$) which is higher than the first fluid temperature thereby absorbing a heat flow (Q) from the electric component (2) and lowering a component temperature ($T_C$) of the electric component (2).

The method further comprises the step of regulating the mass flow (m) of the heat transfer fluid depending on the difference between the second temperature ($T_2$) and the first temperature ($T_1$) and a predefined heat flow (Q) to be absorbed from the electric component (2) according to the following equation:

$$\dot{m} = \frac{\dot{Q}}{c_p\,(T_2 - T_1)}$$

EP 4 715 023 A1

wherein m is the fluid mass flow, Q is the absorbed heat flow, $c_p$ is the heat capacity of the heat transfer fluid, $T_1$ is the temperature of the heat transfer fluid entering the housing (3) of the electric component (2) and $T_2$ is the temperature of the heat transfer fluid exiting the housing (3) of the electric component (2);

The first temperature ($T_1$) of the heat transfer fluid is lower than a temperature required for vaporizing the second component in the heat transfer fluid and wherein the component temperature ($T_C$) of the electric component (2) when being operated is higher than the temperature required for vaporizing the second component in the heat transfer fluid. The second component of the heat transfer fluid vaporizes when the heat transfer fluid absorbs the heat flow ($\dot{Q}$) from the electric component (2).

Fig. 1

**Description**

FIELD OF THE INVENTION

The invention relates to a heat transfer fluid for electric vehicle applications and a method for operating a thermal management arrangement for electric components in electric vehicles and related applications as discussed below.

BACKGROUND OF THE INVENTION

In recent years, electric vehicles have emerged as a pivotal component of the global automotive industry. With a growing awareness of the environmental impacts of internal combustion engines, consumers and governments alike are seeking alternatives that can provide sustainability benefits. Electric vehicles (EVs) offer a promising alternative, as they produce no direct emissions during operation, potentially aiding in reducing the transportation sector's carbon footprint. This technology not only holds the potential to alleviate environmental burdens but also to diminish reliance on fossil fuels.

Despite the potential benefits of EVs, engineers face the challenge of ensuring the thermal performance and reliability of the electronic components within these vehicles. Critical components that require effective cooling are the electric drivetrain, the high-voltage battery and other electric/electronic equipment. The necessity for adequate cooling of electric components in vehicles arises from a variety of reasons, ranging from maintaining performance to helping to extend their lifespan.

When it comes to electric high-performance cars, the requirements on the thermal management of the electronic components, in particular the high-performance drives and the high-voltage batteries used in combination therewith, are typically even higher due to the increased power compared to standard electric vehicles. In order to be able to permanently release the full performance of the high-performance drives and the high-voltage batteries, cooling of the electric components is essential.

Cooling circuits for cooling a high-voltage battery of an electric vehicle are known. For example, DE 10 2011 105 366 A1 relates to a cooling arrangement for a high-voltage battery of a vehicle with a first cooling circuit in which a cooling medium flows through a cooling channel of the high-voltage battery. The first cooling circuit is connected to a second cooling circuit formed as an air conditioning circuit of the vehicle via a latent heat storage.

Typically, most common thermal management fluids are based on mixtures of water with glycol, which cannot be used in the direct cooling of electrical components. Thus, cooling arrangements as described above are not capable to absorb the power loss such as heat when using in particular high-performance drives and corresponding high-voltage batteries with an increased power compared to standard electric vehicles.

Hydrocarbon fluids are currently under consideration for thermal management applications in electric vehicles by a variety of EV manufacturers and suppliers thereof. Because of their dielectric nature, hydrocarbons can be used in direct contact with electric conductors thus facilitating a more efficient heat transfer compared to water-based cooling fluids.

WO 2020/007954 A1 explains that dielectric thermal management fluids, which can be used for direct cooling of electrical components, have typically poor thermal properties in comparison to water-glycol, which can used for indirect cooling. In this context, WO 2020/007954 A1 indicates a dielectric thermal management fluid useful in cooling electronic devices such as lithium-ion batteries, which dielectric thermal management fluid comprises one or more dielectric fluids and one or more halocarbons having a low boiling point. WO 2020/007954 A aims at utilizing the phase change and chemical inertness of the halocarbon materials with the superior dielectric properties and thermal conductivity of the dielectric fluids. More specifically, the halocarbons can undergo a phase change (i.e., liquid to gas (at boiling point)) at temperatures relevant to the operation of lithium-ion batteries and the latent heat of vaporization is used to provide cooling. According to WO 2020/007954 A1 it is crucial to minimize the risk of ignition, which is why halocarbons, which in general have high flash points, must be used as low-boiling component. In view of the limited number of available halocarbons, the applicability of the dielectric thermal management fluids of WO 2020/007954 A1 is limited to specific setups.

It is therefore an object of the present invention to provide an improved heat transfer fluid for electric vehicle applications and a method for operating a thermal management arrangement for electric components in electric vehicles, in particular high performance cars, which can provide more efficient cooling to the electric component.

SUMMARY OF THE INVENTION

The present invention provides a heat transfer fluid suitable for electric vehicle applications, wherein the heat transfer fluid is a dielectric fluid configured to transfer heat in direct contact with live parts, the heat transfer fluid comprises at least 20 wt%, preferably at least 50 wt% of a first component based on the total weight of the heat transfer fluid, and at least 1 wt% and up to 80 wt%, preferably up to 40 wt% of a second component based on the total weight of the heat transfer fluid, wherein the first component has a kinematic viscosity KV 20 $\leq$ 50.0, preferably $\leq$ 20.0 mm$^2$/s, more preferably $\leq$ 10.0mm$^2$/s, more preferably $\leq$ 5.0 mm$^2$/s, a kinematic viscosity KV 100 $\leq$ 10.0 mm$^2$/s, preferably $\leq$ 5.0mm$^2$/s, more

preferably ≤ 3.0mm²/s, more preferably ≤ 2.0 mm²/s, more preferably ≤ 1.0 mm²/s, and an initial boiling point (IBP) ≥ 150 °C, preferably ≥ 180 °C, more preferably ≥ 200 °C, and the second component has a kinematic viscosity KV 20 ≤ 1.0 mm²/s, preferably ≤ 0.7 mm²/s, more preferably ≤ 0.5 mm²/s, wherein the KV 20 of the first component is higher than the KV 20 of the second component, and a final boiling point (FBP) ≤ 100 °C, preferably ≤ 80 °C, more preferably ≤ 60 °C. Typically, the KV 20 of the first component is at least about 1.0 mm²/s higher, or even at least about 2.0 mm²/s higher than the KV 20 of the second component.

The present invention provides the use of any of the heat transfer fluids disclosed herein in an electric vehicle application comprising battery thermal management, electric motor cooling and passenger cell AC. Other potential uses include the use as (immersion) cooling fluid for electronics, computers, server banks, and data centers. While the present disclosure focuses on electric vehicle applications, the skilled person will understand that the principles described herein can be adapted to such other applications without undue burden, as such applications typically are not limited to similar spatial constraints as electric vehicles.

The object is achieved with a method as defined in present claim 1. Preferred embodiments are set out in the appending sub-claims.

According to the invention, there is provided a method for operating a thermal management arrangement for electric components in electric vehicles. In a first step (step a), the thermal management arrangement is provided. The thermal management arrangement comprises a heat source in the form of an electric component which is arranged in a housing, a cooling circuit comprising an encircling fluid line which is thermally coupled to the electric component and a heat exchanger arranged in the fluid line. The thermal management arrangement further comprises a heat transfer fluid disposed in the fluid line and a pump configured for transporting the heat transfer fluid through the fluid line. The heat transfer fluid comprises at least 20 wt%%, preferably at least 50 wt% of a first component based on the total weight of the heat transfer fluid, and at least 1 wt% and up to 80 wt%, preferably up to 40 wt% of a second component based on the total weight of the heat transfer fluid. The first component has a kinematic viscosity KV 20 ≤ 50.0 mm²/s, preferably ≤ 20.0mm²/s, more preferably ≤ 10.0 mm²/s, more preferably ≤ 5.0 mm²/s, a kinematic viscosity KV 100 ≤ 10.0mm²/s, preferably ≤ 5.0mm²/s, more preferably ≤ 3.0mm²/s, more preferably ≤ 2.0 mm²/s, more preferably ≤ 1.0 mm²/s, and an initial boiling point (IBP) ≥ 150 °C, preferably ≥ 180 °C, more preferably ≥ 200 °C. The second component has a kinematic viscosity KV 20 ≤ 1.0 mm²/s, preferably ≤ 0.7 mm²/s, more preferably ≤ 0.5 mm²/s, wherein the KV 20 of the first component is higher than the KV 20 of the second component, and a final boiling point (FBP) ≤ 100 °C, preferably ≤ 80 °C, more preferably ≤ 60 °C. Typically, the KV 20 of the first component is at least about 1.0 mm²/s higher, or even at least about 2.0 mm²/s higher than the KV 20 of the second component

In a subsequent step of the method (step b), the heat transfer fluid is pumped through the fluid line thereby generating a mass flow $\dot{m}$ of the heat transfer fluid. The heat transfer fluid enters the housing of the electric component at a first fluid temperature $T_1$ and exits the housing of the electric component at a second fluid temperature $T_2$ which is higher than the first fluid temperature thereby absorbing a heat flow $\dot{Q}$ from the electric component and lowering a component temperature $T_C$ of the electric component.

In a subsequent step of the method (step c), the mass flow $\dot{m}$ of the heat transfer fluid is regulated depending on the difference between the second temperature $T_2$ and the first temperature $T_1$ and a predefined heat flow $\dot{Q}$ to be absorbed from the electric component according to the following equation:

$$\dot{m} = \frac{\dot{Q}}{c_p \left( T_2 - T_1 \right)}$$

wherein $\dot{m}$ is the fluid mass flow, $\dot{Q}$ is the absorbed heat flow, $c_p$ is the heat capacity of the heat transfer fluid, $T_1$ is the temperature of the heat transfer fluid entering the housing of the electric component and $T_2$ is the temperature of the heat transfer fluid exiting the housing of the electric component.

The first temperature, $T_1$ of the heat transfer fluid is lower than the temperature required for vaporizing the second component in the heat transfer fluid. The component temperature $T_C$ of the electric component when being operated is higher than the temperature required for vaporizing the second component in the heat transfer fluid. The second component of the heat transfer fluid vaporizes when the heat transfer fluid absorbs the heat flow $\dot{Q}$ from the electric component.

It is noted that the temperature at which the second component in the mixture substantially vaporizes may vary dependent from the amount of said second component present in the heat transfer fluid. For example, 100% isopentane boils around 28°C. Based on cooling capacity tests as described in the experimental section, the present inventors found that in a mixture of 40% isopentane +60% polyalphaolefins (PAO), the isopentane heat transfer onsets around 45°C. In a mixture of 20% isopentane + 80% PAO, the isopentane heat transfer onsets around 65°. Thus, when referring herein to a temperature sufficient for vaporizing said second component in the heat transfer fluid, this is not necessarily the same boiling point as can be determined for the pure material in the absence of any further component. The skilled person can determine a suitable temperature for vaporizing the second component without undue burden.

Preferably, the amount and/or type of second component in the heat transfer fluid is chosen such that the second component vaporizes when contacting the electric component, wherein the electric component operates at its optimal temperature range. Due to the second component changing its aggregate state from liquid to gaseous when contacting the electric component, the heat capacity of the heat transfer fluid is increased. This allows a more efficient cooling of the electric component. No compressor is needed in the cooling circuit as for example in AC cooling circuits. According to the present invention a pump is sufficient to transport the heat transfer fluid through the cooling circuit. Moreover, no solid particles are contained in the heat transfer fluid which might cause blocking of the fluid line, the heat exchanger, the electric component or the pump. Preferably, the predefined heat flow $\dot{Q}$ to be absorbed from the electric component is known from previous test drives with the EV. Optionally, the heat flow $\dot{Q}$ is measured for one or more driving cycles and based on the measured values an average is calculated which defines the predefined heat flow $\dot{Q}$. The predefined heat flow $Q$ may then be used to regulate the mass flow $\dot{m}$ of the heat transfer fluid depending on the difference between the second temperature $T_2$ and the first temperature $T_1$ as claimed.

In connection with the present invention, it has been found that the concept of using a combination of dielectric (high-boiling carrier) fluid and a low-boiling component providing vaporization-based cooling allows the use of one single fluid for all EV cooling applications. In particular, by selecting an appropriate low-boiling component both the initial boiling point (IBP) as well as the final boiling point (FBP) can be fine-tuned to provide the optimal boiling range for vaporization-based cooling for the desired application; by selecting an appropriate high-boiling component the overall properties of the resulting heat transfer fluid can be further adjusted to fit the desired application. For example, single phase cooling may be used for the lower temperatures such as for battery thermal management of standard high-voltage batteries used in electric passenger cars and passenger cell air conditioning, whereas dual phase cooling may be used for the "hot spots" such as the electric motor. In high performance cars the "hot spots" may be the high-voltage battery which may be operated at higher temperatures compared to standard high-voltage batteries of electric passenger cars.

In connection with the present invention, the term "dielectric fluid" is to be understood as an electrically insulating fluid capable of quenching electric discharges. It is understood by one skilled in the art that the completeness of quenching can vary from fluid to fluid. It is also understood that a fluid that inhibits all charge flow can be problematic, leading to a build-up of charge, ultimately resulting in a discharge (Electro-Static-Discharge - ESD). Therefore, the skilled practitioner would choose a fluid that has the appropriate level of conductivity, for the specific application. For some applications a conductivity as high as 10 mS/m or higher may be appropriate, while in other applications conductivities as low as 0.1 pS/m or lower may be more appropriate.

In connection with the present invention, the term "live part" is to be understood as a conductive part intended to be electrically energized to transmit electric current during normal operation.

In connection with the present invention, the term boiling point distribution of a component is to be understood as covering the "initial boiling point" (IBP), which is the lowest temperature at which the liquid begins to boil, through to the "final boiling point" (FBP), which is the maximum temperature achieved during the final phase of a distillation. If the component is a pure chemical, its boiling point rarely changes as the product boils out; in this case the initial boiling point (IBP) and the final boiling point (FBP) are essentially the same.

In connection with the present invention, the expression a component that is "essentially free" from a specific element(s) is to be understood as a component containing no more than 0.3 wt%, preferably no more than 0.1 wt%, more preferably no more than 0.0 wt% of said element(s) based on the total weight of said component.

In connection with the present invention, all percentages in describing heat transfer fluids herein are by weight unless specified otherwise. "wt%" means percent by weight.

In an embodiment of the invention, the heat transfer fluid is in direct contact with the electric component. Using the heat transfer fluid in direct contact with electric components facilitates a more efficient heat transfer compared to water-based cooling fluids. In this scenario use of hydrocarbons as a heat transfer fluid is in particular advantageous due to their dielectric nature. The heat transfer fluid can directly contact the electric components without causing a short.

In another embodiment of the invention, the electrical component is immersed in the heat transfer fluid for immersion cooling. Immersing the electric component in the heat transfer fluid maximizes the contact surfaces of the electric components with the heat transfer fluid and thus further increases the heat transfer between the electric component and the heat transfer fluid. Preferably, the housing of the electric component is flooded with heat transfer fluid thereby immersing the electric component in the heat transfer fluid.

In an embodiment of the invention, the electrical component is an electrical energy storage, in particular high-voltage battery, electric motor or electronics of a vehicle. Preferably, the energy storage is a high-voltage battery having an ideally temperature range in operation of at 20 - 40 °C under all environmental and driving conditions. The ideally temperature range in operation of an electric motor is from 160°C to 200°C, preferably at 180 °C depending on the flow of electric energy.

In another embodiment of the invention, the heat exchanger is arranged downstream of the pump and wherein the mass flow $\dot{m}$ of the heat transfer fluid is regulated in step c) such that the second fluid temperature $T_2$ of the heat transfer fluid is lower than the final boiling point (FBP) of the second component of the heat transfer fluid such that the second component of the heat transfer fluid exiting the housing of the electric component condenses upstream of the pump or such that the second fluid temperature $T_2$ of the heat transfer fluid is up to 10°C higher than the final boiling point (FBP) of the second component of the heat transfer fluid such that the second component of the heat transfer fluid condenses in the fluid line downstream of the electric component and upstream of the pump. The second component of the heat transfer fluid vaporizes inside the housing of the electric component, preferably when being in direct contact with the hottest point of the electric component. Also preferably, the heat transfer fluid condenses at the outlet of the housing of the electric component or in a fluid line connecting the electric component with the pump. This increases the heat transfer from the electric component to the heat transfer fluid. Moreover, the pump pumps the heat transfer fluid when being in a liquid phase which protects the pump from being damaged, for example due to cavitation.

In an embodiment of the invention, the heat exchanger is arranged downstream or upstream of the pump and wherein the mass flow $\dot{m}$ of the heat transfer fluid is regulated in step c) such that the second fluid temperature $T_2$ of the heat transfer fluid is higher than the final boiling point (FBP) of the second component of the heat transfer fluid such that the second component of the heat transfer fluid condenses in the heat exchanger. Condensing the second component at the heat exchanger is advantageous as it increases the heat capacity of the heat transfer fluid compared to the condensing at the outlet of the housing of the electric component. However, preferably the heat exchanger is arranged upstream of the pump, as this arrangement ensures that the pump pumps the heat transfer fluid when being in a liquid phase. This protects the pump from being damaged, for example due to cavitation. In case the heat exchanger is arranged downstream of the pump the second component condenses after having passed the pump. This arrangement places greater requirements on the mechanical strength of the pump. The pump must be capable to pump a partly vaporized heat transfer fluid and thus must be able to cope with cavitation.

In another embodiment of the invention, the difference of the initial boiling point (IBP) of the first component and the final boiling point (FBP) of the second component is $\geq$ 100°C, preferably $\geq$ 120°C, more preferably $\geq$ 150°C. By selecting appropriate low-boiling and high-boilig components the initial boiling points as well as the final boiling points can be fine-tuned to provide the optimal heat transfer fluid for the desired application.

In an embodiment of the invention, the first component has an initial boiling point (IBP) of from 180 to 400 °C, preferably of from 180 to 350 °C, more preferably of from 200 to 320 °C and a final boiling point (FBP) of from 200 to 450 °C, preferably of from 210 to 400 °C, more preferably of from 220 to 350 °C.

In another embodiment of the invention, the preceding claims, wherein the second component has an initial boiling point (IBP) of from 10 to 90 °C, preferably of from 20 to 80 °C, more preferably of from 25 to 60 °C and a final boiling point (FBP) of from 20 to 100 °C, preferably of from 25 to 80 °C, more preferably of from 30 to 60 °C. In particular, by selecting an appropriate low-boiling component both the initial boiling point (IBP) as well as the final boiling point (FBP) can be fine-tuned to provide the optimal boiling range for vaporization-based cooling for the desired application.

In an embodiment of the invention, the first component comprises one or more oils selected from the group consisting of a Group I base oil, Group II base oil, Group III base oil, Group IV base oil, and Group V base oil and combinations thereof.

In another embodiment of the invention, the first component comprises less than 5 wt%, preferably less than 3 wt%, more preferably less than 1 wt% of halogen atoms based on the total weight of the second component, in particular the first component is essentially free from halogen atoms. The low-boiling component is not limited to halocarbons. Using a low-boiling component different from a halocarbon provides the advantage that there are virtually unlimited blending possibilities to adjust for a specific boiling point and/or boiling ranges. There are less possibilities for halogenated fluids as the amount of such fluids available is limited.

In an embodiment of the invention, the first component has a flash point of at least 50°C, preferably at least 70°C, more preferably at least 80°C. Typically, the first component has a flash point ranging from 50 to 400 °C, more particularly from 70 to 300 °C, even more particularly from 80 to 200 °C. The present invention is broadly applicable. Initial concerns about fluid flammability limiting further viscosity reduction have meanwhile been addressed, fluid flammability now is much less of a concern than it was a couple of years ago.

In another embodiment of the invention, the second component comprises one or more hydrocarbons selected from the group consisting of acyclic saturated hydrocarbons, cyclic saturated hydrocarbons, acyclic unsaturated hydrocarbons, cyclic unsaturated hydrocarbons, aromatic hydrocarbons, oxygenated derivatives thereof and combinations thereof. Again, the low-boiling component is not limited to one specific group, such as halocarbons. Using a low-boiling component different from a halocarbon provides the advantage that there are virtually unlimited blending possibilities to adjust for a specific boiling point and/or boiling ranges. There are less possibilities with a limited number of fluids.

In an embodiment of the invention, the second component comprises less than 3 wt%, preferably less than 1 wt%, more preferably less than 0.5 wt% of halogen atoms based on the total weight of the second component, in particular the second component is essentially free from halogen atoms. Again the present invention has overcome the previous limitation to use halocarbons exclusively. Thus, the present invention provides the further advantage of avoiding the hazards and waste disposal issues associated with halocarbons.

In another embodiment of the invention, the second component has a flash point of from -100 to 0 °C, preferably of from -70 to -20 °C, more preferably of from -60 to -30 °C. The present invention is broadly applicable. Again, initial concerns about fluid flammability limiting applicability have meanwhile been addressed, fluid flammability now is much less of a concern than it was a couple of years ago.

In an embodiment of the invention, the heat transfer fluid comprises less than 5 wt%, preferably less than 3 wt%, more preferably less than 1 wt% of halogen atoms based on the total weight of the second component, in particular the heat transfer fluid is essentially free from halogen atoms. Again, the present invention provides the further advantage of avoiding the hazards and waste disposal issues associated with halocarbons.

In another embodiment of the invention, the heat transfer fluid has a flash point of from -100 to 400 °C, preferably of from -70 to 300 °C, more preferably of from -60 to 200 °C. Again, the present invention is not limited by fluid flammability concerns.

In an embodiment of the invention, the heat transfer fluid comprises one or more additives selected from the group consisting of an antioxidant, a corrosion inhibitor, an antifoam agent, an antiwear additive, nanomaterials, nanoparticles, and combinations thereof. The present invention is broadly applicable. The heat transfer fluid can encompass various additives allowing its properties to be fine-tuned to perfectly fit the desired application.

In another embodiment of the invention, the heat transfer fluid comprises at least 60 wt%, preferably at least 70 wt%, more preferably at least 80 wt% of the first component based on the total weight of the heat transfer fluid, and/or up to 30 wt%, preferably up to 20 wt%, more preferably up to 10 wt% of the second component based on the total weight of the heat transfer fluid.

BRIEF DESCRIPTION OF THE FIGURES

The invention will now be described in connection with two exemplary embodiments shown in the Figures in which:

Figure 1     shows a schematic view of a thermal management arrangement according to the present invention and
Figure 2     shows a schematic view of thermal management arrangement according to a second embodiment.

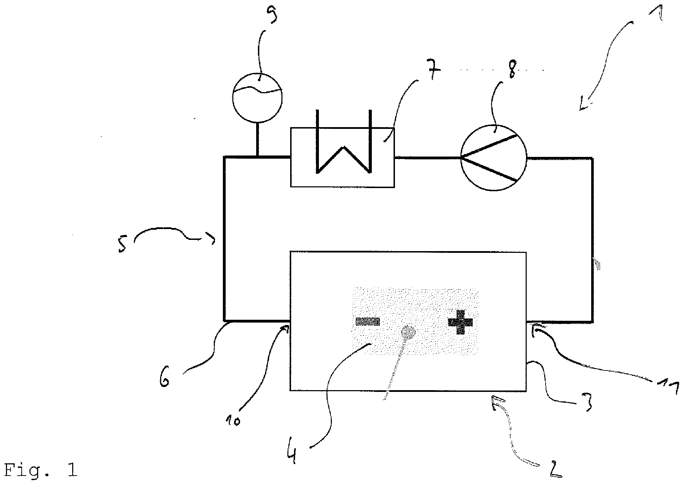

Figure 1 shows a thermal management arrangement 1 including a heat source in the form of an electric component 2 which is arranged in a housing 3. The electrical component 2 is an electrical energy storage, in particular a high-voltage battery 4 for high performance cars. However, the electric component 2 may also be formed as an electric motor or other electronics of an electric vehicle (EV). Alternatively, the heat source may be part of computers, server banks, or data centers.

The thermal management arrangement 1 comprises a cooling circuit 5 comprising an encircling fluid line 6 which is thermally coupled to the high-voltage battery 4, a heat exchanger arranged 7 in the fluid line 6, a heat transfer fluid (not shown) disposed in the fluid line 6 and a pump 8 configured for transporting the heat transfer fluid through the fluid line 6. The heat exchanger 7 is arranged downstream of the pump 8 in fluid direction of the heat transfer fluid. The thermal management arrangement 1 may further comprise an expansion tank 9.

The fluid line 6 is connected to the housing 3 of the high-voltage battery 4 at an inlet 10 and an outlet 11 of the housing 3. The housing 3 is configured such that the heat transfer fluid streams through the housing 3 from the inlet 10 towards the outlet and is in direct contact with the high-voltage battery 4. Preferably, the housing 3 is flooded with the heat transfer fluid such that the high-voltage battery 4 is immersed in the heat transfer fluid for immersion cooling.

The heat transfer fluid comprises at least 20 wt%, preferably at least 50 wt% of a first component based on the total weight of the heat transfer fluid, and at least 1 wt% and up to 80 wt%, preferably up to 40 wt% of a second component based on the total weight of the heat transfer fluid. In preferred embodiments, the heat transfer fluids may comprise at least 40 wt% of the first component, and 10 to 60 wt% of the second component.

The first component has a kinematic viscosity KV 20 $\leq$ 50.0mm$^2$/s, preferably $\leq$ 20.0mm$^2$/s, more preferably $\leq$ 10.0mm$^2$/s, more preferably $\leq$ 5.0 mm$^2$/s, a kinematic viscosity KV 100 $\leq$ 10.0mm$^2$/s, preferably $\leq$ 5.0mm$^2$/s, more preferably $\leq$ 3.0mm$^2$/s, more preferably $\leq$ 2.0 mm2/s, more preferably $\leq$ 1.0 mm$^2$/s, and an initial boiling point (IBP) $\geq$ 150 °C, preferably $\geq$ 180 °C, more preferably $\geq$ 200 °C. Higher viscosities result in lower flowability and are generally less preferred, in particular for use in electric vehicles, where a KV 20 $\leq$ 10.0 mm$^2$/s and a KV 100 $\leq$ 3.0 mm$^2$/s are preferred.

The second component has a kinematic viscosity KV 20 $\leq$ 1.0 mm$^2$/s, preferably $\leq$ 0.7 mm$^2$/s, more preferably $\leq$ 0.5 mm$^2$/s, and a final boiling point (FBP) $\leq$ 100 °C, preferably $\leq$ 80 °C, more preferably $\leq$ 60 °C. The first component generally has a KV 20 which is higher than the KV 20 of the second component. In particular embodiments, the first component has a KV 20 > 1.0 mm$^2$/s. Typically, the KV 20 of the first component is at least about 1.0 mm$^2$/s, more preferably at least about 2.0 mm$^2$/s higher than the KV 20 of the second component.

The difference of the initial boiling point (IBP) of the first component and the final boiling point (FBP) of the second component is $\geq$ 100°C, preferably $\geq$ 120°C, more preferably $\geq$ 150°C.

The first component has an initial boiling point (IBP) of from 180 to 400 °C, preferably of from 180 to 350 °C, more preferably of from 200 to 320 °C and a final boiling point (FBP) of from 200 to 450 °C, preferably of from 210 to 400 °C, more preferably of from 220 to 350 °C. The second component has an initial boiling point (IBP) of from 10 to 90 °C, preferably of from 20 to 80 °C, more preferably of from 25 to 60 °C and a final boiling point (FBP) of from 20 to 100 °C, preferably of from 25 to 80 °C, more preferably of from 30 to 60 °C.

The first component comprises one or more oils selected from the group consisting of a Group I base oil, Group II base oil, Group III base oil, Group IV base oil, and Group V base oil and combinations thereof. The first component comprises less than 5 wt%, preferably less than 3 wt%, more preferably less than 1 wt% of halogen atoms based on the total weight of the second component, in particular the first component is essentially free from halogen atoms. The first component has a flash point of from 50 to 400 °C, preferably of from 70 to 300 °C, more preferably of from 80 to 200 °C.

The second component comprises one or more hydrocarbons selected from the group consisting of acyclic saturated hydrocarbons, cyclic saturated hydrocarbons, acyclic unsaturated hydrocarbons, cyclic unsaturated hydrocarbons, aromatic hydrocarbons, oxygenated derivatives thereof and combinations thereof. The second component comprises less than 3 wt%, preferably less than 1 wt%, more preferably less than 0.5 wt% of halogen atoms based on the total weight of the second component, in particular the second component is essentially free from halogen atoms. The second component has a flash point of from -100 to 0 °C, preferably of from -70 to -20 °C, more preferably of from -60 to -30 °C.

The heat transfer fluid comprises less than 5 wt%, preferably less than 3 wt%, more preferably less than 1 wt% of halogen atoms based on the total weight of the second component, in particular the heat transfer fluid is essentially free from halogen atoms. The heat transfer fluid has a flash point of from -100 to 400 °C, preferably of from -70 to 300 °C, more preferably of from -60 to 200 °C. The heat transfer fluid comprises one or more additives selected from the group consisting of an antioxidant, a corrosion inhibitor, an antifoam agent, an antiwear additive, nanomaterials, nanoparticles, and combinations thereof. The heat transfer fluid comprises at least 60 wt%, preferably at least 70 wt%, more preferably at least 80 wt% of the first component based on the total weight of the heat transfer fluid, and/or up to 30 wt%, preferably up to 20 wt%, more preferably up to 10 wt% of the second component based on the total weight of the heat transfer fluid.

In the following a method for operating the thermal management arrangement for a high-voltage battery 4 for high performance cars is described in connection with Figure 1.

In a first step (step a) the thermal management arrangement 1 as described above is provided.

In a subsequent step (step b) the heat transfer fluid is pumped through the fluid line 6 thereby generating a mass flow $\dot{m}$ of the heat transfer fluid. The heat transfer fluid enters the housing 3 of the high-voltage battery 4 through the inlet 10 at a first fluid temperature $T_1$ and exits the housing 3 of the high-voltage battery 4 through the outlet 11 at a second fluid temperature $T_2$ which is higher than the first fluid temperature thereby absorbing a heat flow $\dot{Q}$ from the high-voltage battery 4 and lowering a component temperature $T_C$ of the high-voltage battery 4.

In a subsequent step (step c) the mass flow $\dot{m}$ of the heat transfer fluid is regulated depending on the difference between the second temperature $T_2$ and the first temperature $T_1$ and a predefined heat flow $\dot{Q}$ to be absorbed from the high-voltage battery 4 according to the following equation:

$$\dot{m} = \frac{\dot{Q}}{c_p \, (T_2 - T_1)}$$

wherein $\dot{m}$ is the fluid mass flow, $\dot{Q}$ is the absorbed heat flow, $c_p$ is the heat capacity of the heat transfer fluid, $T_1$ is the temperature of the heat transfer fluid entering the housing of the high-voltage battery 4 and $T_2$ is the temperature of the heat transfer fluid exiting the housing of the high-voltage battery 4.

The first temperature, $T_1$ of the heat transfer fluid is lower than the temperature required for substantially vaporizing the second component in the heat transfer fluid. The component temperature $T_C$ of the high-voltage battery 4 when being operated is higher than the temperature required for substantially vaporizing the second component in the heat transfer fluid. The second component of the heat transfer fluid vaporizes when the heat transfer fluid absorbs the heat flow $\dot{Q}$ from the high-voltage battery 4.

The mass flow $\dot{m}$ of the heat transfer fluid is regulated such that the second fluid temperature $T_2$ of the heat transfer fluid is lower than the final boiling point (FBP) of the second component of the heat transfer fluid such that the second component of the heat transfer fluid exiting the housing 3 of the high-voltage battery 4 condenses upstream of the pump 8 or such that the second fluid temperature $T_2$ of the heat transfer fluid is up to 10°C higher than the final boiling point (FBP) of the second component of the heat transfer fluid such that the second component of the heat transfer fluid condenses in the fluid line 6 upstream of the pump 8.

Alternatively, the mass flow $\dot{m}$ of the heat transfer fluid is regulated such that the second fluid temperature $T_2$ of the heat transfer fluid is higher than the final boiling point (FBP) of the second component of the heat transfer fluid such that the second component of the heat transfer fluid condenses in the heat exchanger 7. Condensing the second component at the heat exchanger 7 is advantageous as it increases the heat capacity of the heat transfer fluid compared to the condensing at the outlet 11 of the housing 3 of the high-voltage battery 4.

However, in case the heat exchanger 7 is arranged downstream of the pump 8 the second component condenses after having passed the pump 8. This arrangement places greater requirements on the mechanical strength of the pump 8. The pump 8 must be capable to pump at least a partly vaporized heat transfer fluid and thus must be able to cope with cavitation.

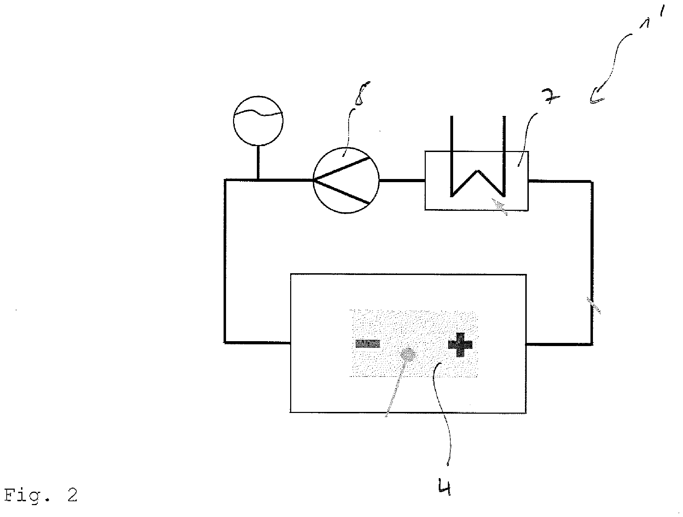

Fig. 2 shows a second embodiment of the thermal management arrangement 1. The thermal management arrangement 1' differs from the one shown in Fig. 1 in that the heat exchanger 7 is arranged downstream of the pump 8 in fluid direction of the heat transfer fluid.

The method for operating the thermal management arrangement 1' for a high-voltage battery 4 for high performance cars as shown in Fig. 2 differs from the one as described above in connection with Fig. 1 in the step of regulating the mass flow $\dot{m}$ of the heat transfer fluid.

In connection with the second embodiment of the thermal management arrangement 1', the mass flow $\dot{m}$ of the heat transfer fluid is regulated such that the second fluid temperature $T_2$ of the heat transfer fluid is higher than the final boiling point (FBP) of the second component of the heat transfer fluid such that the second component of the heat transfer fluid condenses in the heat exchanger 7. This is advantageous as it increases the heat capacity of the heat transfer fluid compared to the condensing at the outlet 11 of the housing 3 of the high-voltage battery 4. However, as the heat exchanger is arranged upstream of the pump it is ensured that the pump 8 pumps the heat transfer fluid when being in a liquid phase. This protects the pump 8 from being damaged, for example due to cavitation.

DETAILED DESCRIPTION

It has been found that the removal of heat from components such as batteries, on-board power electronics, super-fast charging systems, and electric motors during electric vehicle operation can be done using non-aqueous heat transfer fluids, which directly remove heat from the hot surfaces, in particular a heat transfer fluid comprising a first high-boiling component and a second low-boiling component. The heat transfer fluid can provide both single phase cooling for the lower temperatures and dual or two phase cooling (i.e., vaporization-based cooling) for the "hot spots", this allows using a single fluid for all EV applications. For example, the heat transfer fluid can provide liquid phase immersive cooling of the battery, while utilizing two phase cooling for high temperature extremes such as the electric motor. Because of their dielectric nature, hydrocarbons are to be used as they can be used in direct contact with electric conductors thus facilitating a more efficient heat transfer compared to water-based cooling fluids. Initial concerns about fluid flammability have been found to be much less of a concern than it was reported previously.

The first and/or second component each can comprise a mixture of (hydrocarbon) molecules. In case of a mixture of (hydrocarbon) molecules, the component can have a boiling point distribution of a component covering an "initial boiling point" (IBP), which is the lowest temperature at which the liquid begins to boil, through to a "final boiling point" (FBP), which is the maximum temperature achieved during the final phase of a distillation. If the component is a pure chemical, its boiling point rarely changes as the product boils out; in this case the initial boiling point (IBP) and the final boiling point (FBP) are essentially the same. By carefully selecting the individual parts of the component (e.g., dual or multi-blends), the temperature of phase change can be adjusted almost perfectly. This is all the more true when taking into account that the components and their individual parts are not limited to a specific group of chemicals.

The first high-boiling component can comprise one or more of the wide range of heat transfer fluid base oils known in the art. Heat transfer fluid base oils that are useful in the present disclosure are natural oils, mineral oils and synthetic oils, and unconventional oils (or mixtures thereof) can be used unrefined, refined, or rerefined (the latter is also known as reclaimed or reprocessed oil). Unrefined oils are those obtained directly from a natural or synthetic source and used without added purification. These include shale oil obtained directly from retorting operations, petroleum oil obtained directly from primary distillation, and ester oil obtained directly from an esterification process. Refined oils are similar to the oils discussed for unrefined oils except refined oils are subjected to one or more purification steps to improve at least one heat transfer fluid base oil property. One skilled in the art is familiar with many purification processes. These processes include solvent extraction, secondary distillation, acid extraction, base extraction, filtration, and percolation. Rerefined oils are obtained by processes analogous to refined oils but using an oil that has been previously used as a feed stock.

The first component can comprise one or more oils selected from the group consisting of a Group I base oil, Group II base oil, Group III base oil, Group IV base oil, and Group V base oil and combinations thereof. Groups I, II, III, IV and V are broad base oil stock categories developed and defined by the American Petroleum Institute (API Publication 1509; www.API.org) to create guidelines for heat transfer fluid base oils. Group I base stocks have a viscosity index of between about 80 to 120 and contain greater than about 0.03% sulfur and/or less than about 90% saturates. Group II base stocks have a viscosity index of between about 80 to 120, and contain less than or equal to about 0.03% sulfur and greater than or equal to about 90% saturates. Group III stocks have a viscosity index greater than about 120 and contain less than or equal to about 0.03 % sulfur and greater than about 90% saturates. Group IV includes polyalphaolefins (PAO). Group V base stock includes base stocks not included in Groups I-IV.

Natural oils include animal oils, vegetable oils (castor oil and lard oil, for example), and mineral oils. Animal and vegetable oils possessing favorable thermal oxidative stability can be used. Of the natural oils, mineral oils are preferred. Mineral oils vary widely as to their crude source, for example, as to whether they are paraffinic, naphthenic, or mixed paraffinic -naphthenic. Oils derived from coal or shale are also useful. Natural oils vary also as to the method used for their production and purification, for example, their distillation range and whether they are straight run or cracked, hydrorefined, or solvent extracted.

Group II and/or Group III hydroprocessed or hydrocracked base stocks, including synthetic oils such as alkyl aromatics and synthetic esters are also well-known base stock oils.

Synthetic oils include hydrocarbon oil. Hydrocarbon oils include oils such as polymerized and interpolymerized olefins (polybutylenes, polypropylenes, propylene isobutylene copolymers, ethylene-olefin copolymers, and ethylene-alphaolefin copolymers, for example). Polyalphaolefin (PAO) oil base stocks are commonly used synthetic hydrocarbon oil. By way of example, PAOs derived from $C_8$, $C_{10}$, $C_{12}$, $C_{14}$ olefins or mixtures thereof may be utilized. See U.S. Patent Nos. 4,956,122; 4,827,064; and 4,827,073.

The number average molecular weights of the PAOs, which are known materials and generally available on a major commercial scale from suppliers such as ExxonMobil Chemical Company, Chevron Phillips Chemical Company, BP, and others, typically vary from about 250 to about 3,000, although PAO's may be made in viscosities up to about 350 cSt (100°C). The PAOs are typically comprised of relatively low molecular weight hydrogenated polymers or oligomers of alphaolefins which include, but are not limited to, $C_2$ to about $C_{32}$ alphaolefins with the Cs to about $C_{16}$ alphaolefins, such as 1-octene, 1-decene, 1-dodecene and the like, being preferred. The preferred polyalphaolefins are poly- 1-octene, poly- 1-decene and poly- 1-dodecene and mixtures thereof and mixed olefin-derived polyolefins. However, the dimers of higher olefins in the range of $C_{14}$ to $C_{18}$ may be used to provide low viscosity base stocks of acceptably low volatility. Depending on the viscosity grade and the starting oligomer, the PAOs may be predominantly trimers and tetramers of the starting olefins, with minor amounts of the higher oligomers, having a viscosity range of 1.5 to 12 cSt. PAO fluids of particular use may include 3.0 cSt, 3.4 cSt, and/or 3.6 cSt and combinations thereof. Mixtures of PAO fluids having a viscosity range of 1.5 to approximately 350 cSt or more may be used if desired.

The PAO fluids may be conveniently made by the polymerization of an alphaolefin in the presence of a polymerization catalyst such as the Friedel-Crafts catalysts including, for example, aluminum trichloride, boron trifluoride or complexes of boron trifluoride with water, alcohols such as ethanol, propanol or butanol, carboxylic acids or esters such as ethyl acetate or ethyl propionate. For example the methods disclosed by U.S. Patent Nos. 4,149,178 or 3,382,291 may be conveniently used herein. Other descriptions of PAO synthesis are found in the following U.S. Patent Nos. 3,742,082; 3,769,363; 3,876,720; 4,239,930; 4,367,352; 4,413,156; 4,434,408; 4,910,355; 4,956,122; and 5,068,487. The dimers of the $C_{14}$ to $C_{18}$ olefins are described in U.S. Patent No. 4,218,330.

Other useful heat transfer fluid oil base stocks include wax isomerate base stocks and base oils, comprising hydroisomerized waxy stocks (e.g. waxy stocks such as gas oils, slack waxes, fuels hydrocracker bottoms, etc.), hydroisomerized Fischer-Tropsch waxes, Gas-to-Liquids (GTL) base stocks and base oils, and other wax isomerate hydroisomerized base stocks and base oils, or mixtures thereof. Fischer-Tropsch waxes, the high boiling point residues of Fischer-Tropsch synthesis, are highly paraffinic hydrocarbons with very low sulfur content. The hydroprocessing used for the production of such base stocks may use an amorphous hydrocracking/hydroisomerization catalyst, such as one of the specialized lube hydrocracking (LHDC) catalysts or a crystalline hydrocracking/hydroisomerization catalyst, preferably a zeolitic catalyst. For example, one useful catalyst is ZSM-48 as described in U.S. Patent No. 5,075,269, the disclosure of which is incorporated herein by reference in its entirety. Processes for making hydrocracked/hydroisomerized distillates and hydrocracked/hydroisomerized waxes are described, for example, in U.S. Patent Nos. 2,817,693; 4,975,177; 4,921,594 and 4,897,178 as well as in British Patent Nos. 1,429,494; 1,350,257; 1,440,230 and 1,390,359. Each of the aforementioned patents is incorporated herein in their entirety. Particularly favorable processes are described in European Patent Application Nos. 464546 and 464547, also incorporated herein by reference. Processes using Fischer-Tropsch wax feeds are described in U.S. Patent Nos. 4,594,172 and 4,943,672, the disclosures of which are incorporated herein by reference in their entirety.

Gas-to-Liquids (GTL) base oils, Fischer-Tropsch wax derived base oils, and other wax-derived hydroisomerized (wax isomerate) base oils be advantageously used in the instant disclosure, and may have useful kinematic viscosities at 100°C of about 3 cSt to about 50 cSt, preferably about 3 cSt to about 30 cSt, more preferably about 3.5 cSt to about 25 cSt, as exemplified by GTL 4 with kinematic viscosity of about 4.0 cSt at 100°C and a viscosity index of about 141. These Gas-to-Liquids (GTL) base oils, Fischer-Tropsch wax derived base oils, and other wax-derived hydroisomerized base oils may have useful pour points of about -20°C or lower, and under some conditions may have advantageous pour points of about -25°C or lower, with useful pour points of about -30°C to about -40°C or lower. Useful compositions of Gas-to-Liquids (GTL) base oils, Fischer-Tropsch wax derived base oils, and wax-derived hydroisomerized base oils are recited in U.S. Patent Nos. 6,080,301; 6,090,989, and 6,165,949 for example, and are incorporated herein in their entirety by reference.

The hydrocarbyl aromatics can be used as a base oil or base oil component and can be any hydrocarbyl molecule that contains at least about 5% of its weight derived from an aromatic moiety such as a benzenoid moiety or naphthenoid moiety, or their derivatives. These hydrocarbyl aromatics include alkyl benzenes, alkyl naphthalenes, alkyl diphenyl oxides, alkyl naphthols, alkyl diphenyl sulfides, alkylated bis-phenol A, alkylated thiodiphenol, and the like. The aromatic can be mono-alkylated, dialkylated, polyalkylated, and the like. The aromatic can be mono- or poly-functionalized. The hydrocarbyl groups can also be comprised of mixtures of alkyl groups, alkenyl groups, alkynyl, cycloalkyl groups, cycloalkenyl groups and other related hydrocarbyl groups. The hydrocarbyl groups can range from about $C_6$ up to about $C_{60}$ with a range of about $C_8$ to about $C_{20}$ often being preferred. A mixture of hydrocarbyl groups is often preferred, and up to about three such substituents may be present. The hydrocarbyl group can optionally contain sulfur, oxygen, and/or nitrogen containing substituents. The aromatic group can also be derived from natural (petroleum) sources, provided at least about 5% of the molecule is comprised of an above-type aromatic moiety. Viscosities at 100°C of approximately 3 cSt to about 50 cSt are preferred, with viscosities of approximately 3.4 cSt to about 20 cSt often being more preferred for the hydrocarbyl aromatic component. In one embodiment, an alkyl naphthalene where the alkyl group is primarily comprised of 1-hexadecene is used. Other alkylates of aromatics can be advantageously used. Naphthalene or methyl naphthalene, for example, can be alkylated with olefins such as octene, decene, dodecene, tetradecene or higher, mixtures of similar olefins, and the like. Useful concentrations of hydrocarbyl aromatic in a heat transfer fluid composition can be about 2% to about 25%, preferably about 4% to about 20%, and more preferably about 4% to about 15%, depending on the application.

Alkylated aromatics such as the hydrocarbyl aromatics of the present disclosure may be produced by well-known Friedel-Crafts alkylation of aromatic compounds. See Friedel-Crafts and Related Reactions, Olah, G. A. (ed.), Inter-science Publishers, New York, 1963. For example, an aromatic compound, such as benzene or naphthalene, is alkylated by an olefin, alkyl halide or alcohol in the presence of a Friedel-Crafts catalyst. See Friedel-Crafts and Related Reactions, Vol.2, part 1, chapters 14, 17, and 18, See Olah, G. A. (ed.), Inter-science Publishers, New York, 1964. Many homogeneous or heterogeneous, solid catalysts are known to one skilled in the art. The choice of catalyst depends on the reactivity of the starting materials and product quality requirements. For example, strong acids such as AlCl3, BF3, or HF may be used. In some cases, milder catalysts such as $FcCl_3$ or $SnCl_4$ are preferred. Newer alkylation technology uses zeolites or solid super acids.

Esters comprise a useful base stock. Additive solvency and seal compatibility characteristics may be secured by the use of esters such as the esters of dibasic acids with monoal-kanols and the polyol esters of monocarboxylic acids. Esters of the former type include, for example, the esters of dicarboxylic acids such as phthalic acid, succinic acid, alkyl succinic acid, alkenyl succinic acid, maleic acid, azelaic acid, suberic acid, sebacic acid, fumaric acid, adipic acid, linoleic acid dimer, malonic acid, alkyl malonic acid, alkenyl malonic acid, etc., with a variety of alcohols such as butyl alcohol, hexyl alcohol, dodecyl alcohol, 2-ethylhexyl alcohol, etc. Specific examples of these types of esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, etc.

Particularly useful synthetic esters are those which are obtained by reacting one or more polyhydric alcohols, preferably the hindered polyols (such as the neopentyl polyols, e.g., neopentyl glycol, trimethylol ethane, 2-methyl-2-propyl- 1,3 -propanediol, trimethylol propane, pentaerythritol and dipentaerythritol) with alkanoic acids containing at least about 4 carbon atoms, preferably $C_5$ to $C_{30}$ acids such as saturated straight chain fatty acids including caprylic acid, capric acid, lauric acid, myristic acid, palmitic acid, stearic acid, arachic acid, and behenic acid, or the corresponding branched chain fatty acids or unsaturated fatty acids such as oleic acid, or mixtures of any of these materials.

Suitable synthetic ester components include the esters of trimethylol propane, trimethylol butane, trimethylol ethane, pentaerythritol and/or dipentaerythritol with one or more monocarboxylic acids containing from about 5 to about 10 carbon atoms. These esters are widely available commercially, for example, the Mobil P-41 and P-51 esters of ExxonMobil Chemical Company.

Also useful are esters derived from renewable material such as coconut, palm, rapeseed, soy, sunflower and the like. These esters may be monoesters, di-esters, polyol esters, complex esters, or mixtures thereof. These esters are widely available commercially, for example, the Mobil P-51 ester of ExxonMobil Chemical Company.

Heat transfer fluid formulations containing renewable esters are included in this disclosure. For such formulations, the renewable content of the ester is typically greater than about 70 weight percent, preferably more than about 80 weight percent and most preferably more than about 90 weight percent.

Other useful fluids include non-conventional or unconventional base stocks that have been processed, preferably catalytically, or synthesized to provide high performance heat transfer characteristics.

Non-conventional or unconventional base stocks/base oils include one or more of a mixture of base stock(s) derived from one or more Gas-to-Liquids (GTL) materials, as well as isomerate/isodewaxate base stock(s) derived from natural wax or waxy feeds, mineral and or non-mineral oil waxy feed stocks such as slack waxes, natural waxes, and waxy stocks such as gas oils, waxy fuels hydrocracker bottoms, waxy raffinate, hydrocrackate, thermal crackates, or other mineral, mineral oil, or even non-petroleum oil derived waxy materials such as waxy materials received from coal liquefaction or shale oil, and mixtures of such base stocks.

GTL materials are materials that are derived via one or more synthesis, combination, transformation, rearrangement, and/or degradation/deconstructive processes from gaseous carbon-containing compounds, hydrogen-containing compounds and/or elements as feed stocks such as hydrogen, carbon dioxide, carbon monoxide, water, methane, ethane, ethylene, acetylene, propane, propylene, propyne, butane, butylenes, and butynes. GTL base stocks and/or base oils are GTL materials that are generally derived from hydrocarbons; for example, waxy synthesized hydrocarbons, that are themselves derived from simpler gaseous carbon-containing compounds, hydrogen-containing compounds and/or elements as feed stocks. GTL base stock(s) and/or base oil(s) include oils boiling in the lube oil boiling range (1) separated/fractionated from synthesized GTL materials such as, for example, by distillation and subsequently subjected to a final wax processing step which involves either or both of a catalytic dewaxing process, or a solvent dewaxing process, to produce lube oils of reduced/low pour point; (2) synthesized wax isomerates, comprising, for example, hydrodewaxed or hydroisomerized cat and/or solvent dewaxed synthesized wax or waxy hydrocarbons; (3) hydrodewaxed or hydroisomerized cat and/or solvent dewaxed Fischer-Tropsch (F-T) material (i.e., hydrocarbons, waxy hydrocarbons, waxes and possible analogous oxygenates); preferably hydrodewaxed or hydroisomerized/followed by cat and/or solvent dewaxing dewaxed F-T waxy hydrocarbons, or hydrodewaxed or hydroisomerized/followed by cat (or solvent) dewaxing dewaxed, F-T waxes, or mixtures thereof.

GTL base stock(s) and/or base oil(s) derived from GTL materials, especially, hydrodewaxed or hydroisomerized/followed by cat and/or solvent dewaxed wax or waxy feed, preferably F-T material derived base stock(s) and/or base oil(s), are characterized typically as having kinematic viscosities at 100°C of from about 2 mm$^2$/s to about 50 mm$^2$/s (ASTM D445). They are further characterized typically as having pour points of -5°C to about -40°C or lower (ASTM D97). They are also characterized typically as having viscosity indices of about 80 to about 140 or greater (ASTM D2270).

In addition, the GTL base stock(s) and/or base oil(s) are typically highly paraffinic (>90% saturates), and may contain mixtures of monocycloparaffins and multicycloparaffins in combination with non-cyclic isoparaffins. The ratio of the naphthenic (i.e., cycloparaffin) content in such combinations varies with the catalyst and temperature used. Further, GTL base stock(s) and/or base oil(s) typically have very low sulfur and nitrogen content, generally containing less than about 10 ppm, and more typically less than about 5 ppm of each of these elements. The sulfur and nitrogen content of GTL base stock(s) and/or base oil(s) obtained from F-T material, especially F-T wax, is essentially nil. In addition, the absence of phosphorous and aromatics make this materially especially suitable for the formulation of low SAP products.

The term GTL base stock and/or base oil and/or wax isomerate base stock and/or base oil is to be understood as embracing individual fractions of such materials of wide viscosity range as recovered in the production process, mixtures of two or more of such fractions, as well as mixtures of one or two or more low viscosity fractions with one, two or more higher viscosity fractions to produce a blend wherein the blend exhibits a target kinematic viscosity.

The GTL material, from which the GTL base stock(s) and/or base oil(s) is/are derived is preferably an F-T material (i.e., hydrocarbons, waxy hydrocarbons, wax).

Base oils for use in the formulated heat transfer fluids useful in the present disclosure are any of the variety of oils corresponding to API Group I, Group II, Group III, Group IV, and Group V oils, and mixtures thereof, preferably API Group II, Group III, Group IV, and Group V oils, and mixtures thereof, more preferably Group III, Group IV, and Group V base oils, and mixtures thereof. Highly paraffinic base oils can be used to advantage in the formulated heat transfer fluids useful in the present disclosure. Minor quantities of Group I stock, such as the amount used to dilute additives for blending into formulated lube oil products, can also be used. Even in regard to the Group II stocks, it is preferred that the Group II stock be in the higher quality range associated with that stock, i.e. a Group II stock having a viscosity index in the range 100 < VI < 120.

Preferred base fluids for use in the formulated heat transfer fluids useful in the present disclosure include, for example, aromatic hydrocarbons, polyolefins, paraffins, isoparaffins, esters, ethers, fluorinated fluids, nano fluids, and silicone oils.

The first component constitutes the major component of the heat transfer fluid composition of the present disclosure and typically is present in an amount ranging from at least 50 wt% of the total weight of the heat transfer fluid. In particular, the heat transfer fluid comprises at least 60 wt%, preferably at least 70 wt%, more preferably at least 80 wt% of the first component based on the total weight of the heat transfer fluid.

In a particular embodiment, the first component is selected from Mobil EV Therm Elite 701 (based on Spectrasyn 2), Mobil EV Therm Elite 702 (based on Isopar N) and mixtures thereof.

The first component can comprise one or more of the wide range of low boiling hydrocarbons known in the art. Low-boiling hydrocarbons are hydrocarbons having a boiling point ≤ 150 °C, preferably ≤ 100 °C, more preferably ≤ 60 °C.

Low-boiling hydrocarbons suitable for the heat transfer fluids according to the present disclosure include but are not limited to acyclic saturated hydrocarbons, cyclic saturated hydrocarbons, acyclic unsaturated hydrocarbons, cyclic unsaturated hydrocarbons, aromatic hydrocarbons, oxygenated derivatives thereof and combinations thereof.

Acyclic saturated hydrocarbons suitable for the heat transfer fluids according to the present disclosure include but are not limited to linear and branched acyclic saturated hydrocarbons.

Linear acyclic saturated hydrocarbons suitable for the heat transfer fluids according to the present disclosure include but are not limited to pentane, hexane, heptane and octane. Linear acyclic saturated hydrocarbons particularly suitable for the heat transfer fluids according to the present disclosure include but are not limited to pentane and hexane.

Branched acyclic saturated hydrocarbons suitable for the heat transfer fluids according to the present disclosure include but are not limited to isopentane, neopentane, 2-methylpentane, 3-methylpentane, 2,2-dimethylbutane, 2,3-dimethylbutane, 2-methylhexane, 3-methylhexane, 2,2-dimethylpentane, 2,3-dimethylpentane, 2,4-dimethylpentane, 3,3-dimethylpentane, 3-ethylpentane, 2,2,3-trimethylbutane, 2-methylheptane, 3-methylheptane, 4-methylheptane, 2,2-dimethylhexane, 2,3-dimethylhexane, 2,4-dimethylhexane, 2,5-dimethylhexane, 3,3-dimethylhexane, 3,4-dimethylhexane, 3-ethylhexane, 2,2,3-trimethylpentane, 2,2,4-trimethylpentane, 2,3,3-trimethylpentane, 2,3,4-trimethylpentane, 3-ethyl-2-methylpentane, 3-ethyl-3-methylpentane and 2,2,3,3-tetramethylbutane. Branched acyclic saturated hydrocarbons particularly suitable for the heat transfer fluids according to the present disclosure include but are not limited to isopentane, neopentane, 2-methylpentane, 3-methylpentane, 2,2-dimethylbutane and 2,3-dimethylbutane.

Cyclic saturated hydrocarbons suitable for the heat transfer fluids according to the present disclosure include but are not limited to substituted and unsubstituted cyclic saturated hydrocarbons.

Unsubstituted cyclic saturated hydrocarbons suitable for the heat transfer fluids according to the present disclosure include but are not limited to cyclobutene, cyclopentane, cyclohexane, cycloheptane and cyclooctane. Unsubstituted cyclic saturated hydrocarbons particularly suitable for the heat transfer fluids according to the present disclosure include but are not limited to cyclopentane and cyclohexane.

Substituted cyclic saturated hydrocarbons suitable for the heat transfer fluids according to the present disclosure include but are not limited to 2-cyclopropylbutane, ethylcyclopentane, ethylcyclohexane methylcyclopentane and methylcyclohexane. Substituted cyclic saturated hydrocarbons particularly suitable for the heat transfer fluids according to the present disclosure include but are not limited to methylcyclopentane and methylcyclohexane

Acyclic unsaturated hydrocarbons suitable for the heat transfer fluids according to the present disclosure include but are not limited to linear and branched acyclic unsaturated hydrocarbons.

Linear acyclic unsaturated hydrocarbons suitable for the heat transfer fluids according to the present disclosure include but are not limited to 1-pentene, 2-pentene, 1-hexene, 2-hexene, 3-hexene, 1,5-hexadiene, 1-hexyne, 2-hexyne, 3-hexyne, 1-pentyne, 2-pentyne, 1-heptene and 1-octene. Linear acyclic unsaturated hydrocarbons particularly suitable for the heat transfer fluids according to the present disclosure include but are not limited to 1-pentene, 1-hexene and 1,5-hexadiene.

Branched acyclic unsaturated hydrocarbons suitable for the heat transfer fluids according to the present disclosure include but are not limited to 2-methyl-1-butene, 3-methyl-1-butene, 2-methyl-2-butene, 3-methyl-1-butyne, 2-methyl-1-pentene, 3-methyl-1-pentene, 4-methyl-1-pentene, 2-methyl-2-pentene, 3-methyl-2-pentene, 4-methyl-2-pentene, 2,3-dimethyl-1-butene, 4-methyl-1-pentyne, 4-methyl-2-pentyne, 3-methyl-1-pentyne, 3,3-dimethyl-1-butyne, 3,3-dimethyl-1-butene, 2,3-dimethyl-2-butene and 2-ethyl-1-butene. Branched acyclic unsaturated hydrocarbons particularly suitable for the heat transfer fluids according to the present disclosure include but are not limited to 2-methyl-1-butene, 3-methyl-1-butene, 2-methyl-2-butene, 2-methyl-1-pentene, 3-methyl-1-pentene, 4-methyl-1-pentene, 2-methyl-2-pentene, 3-methyl-2-pentene, 4-methyl-2-pentene and 2,3-dimethyl-1-butene.

Cyclic unsaturated hydrocarbons suitable for the heat transfer fluids according to the present disclosure include but are not limited to substituted and unsubstituted cyclic unsaturated hydrocarbons.

Unsubstituted cyclic unsaturated hydrocarbons suitable for the heat transfer fluids according to the present disclosure include but are not limited to cyclobutene, cyclopentene, cyclohexene, cycloheptene, 1,3-cyclohexadiene, 1,4-cyclohexadiene, 1,5-cyclooctadiene, cis-cyclooctene and trans-cyclooctene. Unsubstituted cyclic unsaturated hydrocarbons particularly suitable for the heat transfer fluids according to the present disclosure include but are not limited to cyclopentene and cyclohexene.

Substituted cyclic unsaturated hydrocarbons suitable for the heat transfer fluids according to the present disclosure include but are not limited to 1-methylcyclopentene, 3-methylcyclopentene, 1-methylcyclohexene and 3-methylcyclohexene. Substituted cyclic unsaturated hydrocarbons particularly suitable for the heat transfer fluids according to the present disclosure include but are not limited to 1-methylcyclopentene and 1-methylcyclohexene.

Aromatic hydrocarbons suitable for the heat transfer fluids according to the present disclosure include but are not limited to substituted and unsubstituted aromatic hydrocarbons.

Unsubstituted aromatic hydrocarbons suitable for the heat transfer fluids according to the present disclosure include but are not limited to benzene and naphthalene. Unsubstituted aromatic hydrocarbons particularly suitable for the heat transfer fluids according to the present disclosure include but are not limited to benzene.

Substituted aromatic hydrocarbons suitable for the heat transfer fluids according to the present disclosure include but are not limited to toluene, ethylbenzene and xylene. Substituted aromatic hydrocarbons particularly suitable for the heat transfer fluids according to the present disclosure include but are not limited to toluene.

The second component constitutes a minor component of the heat transfer fluid composition of the present disclosure and typically is present in an amount ranging up to 40 wt% of the total weight of the heat transfer fluid. In particular, the heat transfer fluid comprises up to 30 wt%, preferably up to 20 wt%, more preferably up to 10 wt% of the second component based on the total weight of the heat transfer fluid.

In a particular embodiment, the second component is selected from Exxsol Isopentane S, Exxsol Pentane 100 S, Exxsol Isohexane and mixtures thereof.

The formulated heat transfer fluid useful in the present disclosure may additionally contain one or more commonly used heat transfer fluid performance additives including but not limited to antioxidants, corrosion inhibitors, antifoam agents, antiwear agents, nanomaterials, nanoparticles, and others. These additives are commonly delivered with varying amounts.

The additives useful in this disclosure do not have to be soluble in the heat transfer fluids.

The types and quantities of performance additives used in combination with the instant disclosure in heat transfer fluid compositions are not limited by the examples shown herein as illustrations.

The heat transfer fluids typically include at least one antioxidant. Antioxidants retard the oxidative degradation of base oils during service. Such degradation may result in deposits on metal surfaces, the presence of sludge, or a viscosity increase in the heat transfer fluid. One skilled in the art knows a wide variety of oxidation inhibitors that are useful in heat transfer fluids. See, Klamann in Lubricants and Related Products, op cite, and U.S. Patent Nos. 4,798,684 and 5,084,197, for example.

Illustrative antioxidants include sterically hindered alkyl phenols such as 2,6-di-tert-butylphenol, 2,6-di-tert-butyl-p-cresol and 2,6-di-tert-butyl-4-(2-octyl-3-propanoic) phenol; N,N-di(alkylphenyl) amines; and alkylated phenylenediamines.

The antioxidant may be a hindered phenolic antioxidant such as butylated hydroxytoluene, suitably present in an amount of 0.01 to 5%, preferably 0.4 to 0.8%, by weight of the heat transfer fluid. Alternatively, or in addition, the antioxidant may comprise an aromatic amine antioxidant such as mono-octylphenylalphanapthyl amine or p,p-dioctyldiphenylamine, used singly or in admixture. The amine antioxidant component is suitably present in a range of from 0.01 to 5% by weight of the heat transfer fluid, more preferably 0.5 to 1.5%.

Useful antioxidants include hindered phenols. These phenolic antioxidants may be ashless (metal-free) phenolic compounds or neutral or basic metal salts of certain phenolic compounds. Typical phenolic antioxidant compounds are the hindered phenolics which are the ones which contain a sterically hindered hydroxyl group, and these include those derivatives of dihydroxy aryl compounds in which the hydroxyl groups are in the o- or p-position to each other. Typical phenolic antioxidants include the hindered phenols substituted with $C_6$+ alkyl groups and the alkylene coupled derivatives of these hindered phenols. Examples of phenolic materials of this type 2-t-butyl-4-heptyl phenol; 2-t-butyl-4-octyl phenol; 2-t-butyl-4-dodecyl phenol; 2,6-di-t-butyl-4-heptyl phenol; 2,6-di-t-butyl-4-dodecyl phenol; 2-methyl-6-t-butyl-4-heptyl phenol; and 2-methyl-6-t-butyl-4-dodecyl phenol. Other useful hindered mono-phenolic antioxidants may include for example hindered 2,6-di-alkyl-phenolic proprionic ester derivatives. Bis-phenolic antioxidants may also be advantageously used in combination with the instant disclosure. Examples of ortho-coupled phenols include: 2,2'-bis(4-heptyl-6-t-butyl-phenol); 2,2'-bis(4-octyl-6-t-butyl-phenol); and 2,2'-bis(4-dodecyl-6-t-butyl-phenol). Para-coupled bisphenols include for example 4,4'-bis(2,6-di-t-butyl phenol) and 4,4'-methylene-bis(2,6-di-t-butyl phenol).

Other illustrative phenolic antioxidants include sulfurized and non-sulfurized phenolic antioxidants. The terms "phenolic type" or "phenolic antioxidant" used herein includes compounds having one or more than one hydroxyl group bound to an aromatic ring which may itself be mononuclear, e.g., benzyl, or poly-nuclear, e.g., naphthyl and Spiro aromatic compounds. Thus "phenol type" includes phenol per se, catechol, resorcinol, hydroquinone, naphthol, etc., as well as alkyl or alkenyl and sulfurized alkyl or alkenyl derivatives thereof, and bisphenol type compounds including such bi-phenol compounds linked by alkylene bridges sulfuric bridges or oxygen bridges. Alkyl phenols include mono- and poly-alkyl or alkenyl phenols, the alkyl or alkenyl group containing from 3-100 carbons, preferably 4 to 50 carbons and sulfurized derivatives thereof, the number of alkyl or alkenyl groups present in the aromatic ring ranging from 1 to up to the available unsatisfied valences of the aromatic ring remaining after counting the number of hydroxyl groups bound to the aromatic ring.

Preferred phenolic antioxidant compounds are the hindered phenolics and phenolic esters which contain a sterically hindered hydroxyl group, and these include those derivatives of dihydroxy aryl compounds in which the hydroxyl groups are in the o- or p-position to each other. Typical phenolic antioxidants include the hindered phenols substituted with C.sub.1+ alkyl groups and the alkylene coupled derivatives of these hindered phenols. Examples of phenolic materials of this type 2-t-butyl-4-heptyl phenol; 2-t-butyl-4-octyl phenol; 2-t-butyl-4-dodecyl phenol; 2,6-di-t-butyl-4-heptyl phenol; 2,6-di-t-butyl-4-dodecyl phenol; 2-methyl-6-t-butyl-4-heptyl phenol; 2-methyl-6-t-butyl-4-dodecyl phenol; 2,6-di-t-butyl-4 methyl phenol; 2,6-di-t-butyl-4-ethyl phenol; and 2,6-di-t-butyl 4 alkoxy phenol.

Phenolic type antioxidants are well known in the heat transfer fluid industry and commercial examples such as Ethanox™ 1710, Irganox™ 1076, Irganox™ L1035, Irganox™ 1010, Irganox™ L109, Irganox™ L118, Irganox™ L135 and the like are familiar to those skilled in the art. The above is presented only by way of exemplification, not limitation on the type of phenolic antioxidants which can be used.

Other examples of phenol-based antioxidants include 2-t-butylphenol, 2-t-butyl-4-methylphenol, 2-t-butyl-5-methylphenol, 2,4-di-t-butylphenol, 2,4-dimethyl-6-t-butylphenol, 2-t-butyl-4-methoxyphenol, 3-t-butyl-4-methoxyphenol, 2,5-di-t-butylhydroquinone (manufactured by the Kawaguchi Kagaku Co. under trade designation "Antage DBH"), 2,6-di-t-butylphenol and 2,6-di-t-butyl-4-alkylphenols such as 2,6-di-t-butyl-4-methylphenol and 2,6-di-t-butyl-4-ethylphenol; 2,6-di-t-butyl-4-alkoxyphenols such as 2,6-di-t-butyl-4-methoxyphenol and 2,6-di-t-butyl-4-ethoxyphenol, 3,5-di-t-butyl-4-hydroxybenzylmercaptoocty-1 acetate, alkyl-3-(3,5-di-t-butyl-4-hydroxyphenyl)propionates such as n-octyl-3-(3,5-di-t-butyl-4-hydroxyphenyl)propionate (manufactured by the Yoshitomi Seiyaku Co. under the trade designation "Yonox SS"), n-dodecyl-3-(3,5-di-t-butyl-4-hydroxyphenyl)propionate and 2'-ethylhexyl-3-(3,5-di-t-butyl-4-hydroxyphenyl)propionate; 2,6-di-t-butyl-alpha-dimethylamino-p-cresol, 2,2'-methylenebis(4-alkyl-6-t-butylphenol) compounds such as 2,2'-methylenebis(4-methyl-6-t-butylphe-nol) (manufactured by the Kawaguchi Kagaku Co. under the trade designation "Antage W-400") and 2,2'-methylenebis(4-ethyl-6-t-butylphenol) (manufactured by the Kawaguchi Kagaku Co. under the trade designation "Antage W-500"); bisphenols such as 4,4'-butylidenebis(3-methyl-6-t-butyl-phenol) (manufactured by the Kawaguchi Kagaku Co. under the trade designation "Antage W-300"), 4,4'-methylenebis(2,6-di-t-butylphenol) (manufactured by Laporte Performance Chemicals under the trade designation "Ionox 220AH"), 4,4'-bis(2,6-di-t-butylphenol), 2,2-(di-p-hydroxyphenyl)propane (Bisphenol A), 2,2-bis(3,5-di-t-butyl-4-hydroxyphenyl)propane, 4,4'-cyclohexylidenebis(2,6-di-t-butylphenol), hexamethylene glycol bis[3, (3,5-di-t-butyl-4-hydroxyphenyl)propionate] (manufactured by the Ciba Specialty Chemicals Co. under the trade designation "Irganox L109"), triethylene glycol bis[3-(3-t-butyl-4-hydroxy-y-5-methylphenyl)propionate] (manufactured by the Yoshitomi Seiyaku Co. under the trade designation "Tominox 917"), 2,2'-thio[diethyl-3-(3,5-di-t-butyl-4-hydroxyphenyl)propionate] (manufactured by the Ciba Speciality Chemicals Co. under the trade designation "Irganox L115"), 3,9-bis{ 1,1-dimethyl-2-[3-(3-t-butyl-4-hydroxy-5-methylphenyl)-propionyloxy]ethyl}2,4,8,10-tetraoxaspiro[5,5]undecane (manufactured by the Sumitomo Kagaku Co. under the trade designation "Sumilizer GA80") and 4,4'-thiobis(3-methyl-6-t-butylphenol) (manufactured by the Kawaguchi Kagaku Co. under the trade designation "Antage RC"), 2,2'-thiobis(4,6-di-t-butyl-resorcinol); polyphenols such as tetrakis[methylene-3-(3,5-di-t-butyl-4-hydroxyphenyl)propionato [methane (manufactured by the Ciba Speciality Chemicals Co. under the trade designation "Irganox L101"), 1,1,3-tris(2-methyl-4-hydroxy-5-t-butylpheny-I)butane (manufactured by the Yoshitomi Seiyaku Co. under the trade designation "Yoshinox 930"), 1,3,5-trimethyl-2,4,6-tris(3,5-di-t-butyl-4-hydroxybenzyl)benzene (manufactured by Ciba Speciality Chemicals under the trade designation "Irganox 330"), bis[3,3'-bis(4'-hydroxy-3'-t-butylpheny-I)butyric acid] glycol ester, 2-(3',5'-di-t-butyl-4-hydroxyphenyl)-methyl-4-(2",4"-di-t-butyl-3"-hydroxy-phenyl)methyl-6-t-butylphenol and 2,6-bis(2'-hydroxy-3'-t-butyl-5'-methylbenzyl)-4-methylphenol; and phenol/aldehyde condensates such as the condensates of p-t-butylphenol and formaldehyde and the condensates of p-t-butylphenol and acetaldehyde.

Effective amounts of one or more catalytic antioxidants may also be used. The catalytic antioxidants comprise an effective amount of a) one or more oil soluble polymetal organic compounds; and, effective amounts of b) one or more substituted N,N'-diaryl-o-phenylenediamine compounds or c) one or more hindered phenol compounds; or a combination of both b) and c). Catalytic antioxidants are more fully described in U.S. Patent No. 8, 048,833, herein incorporated by reference in its entirety.

Typical aromatic amines antioxidants have alkyl substituent groups of at least 6 carbon atoms. Examples of aliphatic groups include hexyl, heptyl, octyl, nonyl, and decyl. Generally, the aliphatic groups will not contain more than 14 carbon atoms. The general types of such other additional amine antioxidants which may be present include diphenylamines, phenothiazines, imidodibenzyls and diphenyl phenylene diamines. Mixtures of two or more of such other additional aromatic amines may also be present. Polymeric amine antioxidants can also be used.

The antioxidants or oxidation inhibitors that are useful in heat transfer fluids of the disclosure are the hindered phenols (e.g., 2,6-di-(t-butyl)phenol); aromatic amines (e.g., alkylated diphenyl amines); alkyl polysulfides; selenides; borates (e.g., epoxide/boric acid reaction products); phosphorodithioic acids, esters and/or salts; and the dithiocarbamate (e.g., zinc dithiocarbamates). In an embodiment, these antioxidants or oxidation inhibitors can be employed individually or at ratios of amine/phenolic from 1:10 to 10:1 of the mixtures preferred.

The antioxidants or oxidation inhibitors that are also useful in heat transfer fluid compositions of the disclosure are chlorinated aliphatic hydrocarbons such as chlorinated wax; organic sulfides and polysulfides such as benzyl disulfide, bis(chlorobenzyl)disulfide, dibutyl tetrasulfide, sulfurized methyl ester of oleic acid, sulfurized alkylphenol, sulfurized dipentene, and sulfurized terpene; phosphosulfiirized hydrocarbons such as the reaction product of a phosphorus sulfide with turpentine or methyl oleate, phosphorus esters including principally dihydrocarbon and trihydrocarbon phosphites such as dibutyl phosphite, diheptyl phosphite, dicyclohexyl phosphite, pentylphenyl phosphite, dipentylphenyl phosphite, tridecyl phosphite, distearyl phosphite, dimethyl naphthyl phosphite, oleyl 4 -pentylphenyl phosphite, polypropylene (molecular weight 500)-substituted phenyl phosphite, diisobutyl-substituted phenyl phosphite; metal thiocarbamates, such as zinc dioctyldithiocarbamate, and barium heptylphenyl dithiocarbamate; Group II metal phosphorodithioates such as zinc dicyclohexylphosphorodithioate, zinc dioctylphosphorodithioate, barium di(heptylphenyl)(phosphorodithioate, cadmium dinonylphosphorodithioate, and the reaction of phosphorus pentasulfide with an equimolar mixture of isopropyl alcohol, 4-methyl-2-pentanol, and n-hexyl alcohol.

Oxidation inhibitors including organic compounds containing sulfur, nitrogen, phosphorus and some alkylphenols are useful additives in the heat transfer fluid formulations of this disclosure. Two general types of oxidation inhibitors are those that react with the initiators, peroxy radicals, and hydroperoxides to form inactive compounds, and those that decompose these materials to form less active compounds. Examples are hindered (alkylated) phenols, e.g. 6-di(tert-butyl)-4-methyl-phenol[2,6-di(tert-butyl)-p-cresol, DBPC], and aromatic amines, e.g. N-phenyl-alpha-naphthalamine.

Sulfurized alkyl phenols and alkali or alkaline earth metal salts thereof also are useful antioxidants.

Another class of antioxidant used in heat transfer fluid compositions, and which may also be present are oil-soluble copper compounds. Any oil-soluble suitable copper compound may be blended into the heat transfer fluid. Examples of suitable copper antioxidants include copper dihydrocarbyl thio- or dithio-phosphates and copper salts of carboxylic acid (naturally occurring or synthetic). Other suitable copper salts include copper dithiacarbamates, sulphonates, phenates, and acetylacetonates. Basic, neutral, or acidic copper Cu(I) and or Cu(II) salts derived from alkenyl succinic acids or anhydrides are known to be particularly useful.

A sulfur-containing antioxidant may be any and every antioxidant containing sulfur, for example, including dialkyl thiodipropionates such as dilauryl thiodipropionate and distearyl thiodipropionate, dialkyldithiocarbamic acid derivatives (excluding metal salts), bis(3,5-di-t-butyl-4-hydroxybenzyl) sulfide, mercaptobenzothiazole, reaction products of phosphorus pentoxide and olefins, and dicetyl sulfide. Of these, preferred are dialkyl thiodipropionates such as dilauryl thiodipropionate and distearyl thiodipropionate. The amine-type antioxidant includes, for example, monoalkyldiphenylamines such as monooctyldiphenylamine and monononyldiphenyl amine; dialkyldiphenylamines such as 4,4'-dibutyldiphenylamine, 4,4'-dipentyldiphenylamine, 4,4'-dihexyldiphenylamine, 4,4'-diheptyldiphenylamine, 4,4'-dioctyldiphenylamine and 4,4'-dinonyldiphenylamine; polyalkyldiphenylamines such as tetrabutyldiphenylamine, tetrahexyldiphenylamine, tetraoctyldiphenylamine and tetranonyldiphenylamine; and naphthylamines such as alpha-naphthylamine, phenyl-alpha-naphthylamine, butylphenylalpha-naphthylamine, pentylphenyl-alpha-naphthylamine, hexylphenyl-alpha-naphthylamine, heptylphenyl-alpha-naphthylamine, octylphenyl-alpha-naphthyl amine and nonylphenyl-alpha-naphthylamine. Of these, preferred are dialkyldiphenylamines.

Examples of sulphur-based antioxidants include dialkylsulphides such as didodecylsulphide and dioctadecylsulphide; thiodipropionic acid esters such as didodecyl thiodipropionate, dioctadecyl thiodipropionate, dimyristyl thiodipropionate and dodecyloctadecyl thiodipropionate, and 2-mercaptobenzimidazole.

Such antioxidants may be used individually or as mixtures of one or more types of antioxidants, the total amount employed being an amount of about 0.01 to about 5 wt%, preferably 0.1 to about 4.5 wt%, more preferably 0.25 to 3 wt% (on an as-received basis).

The heat transfer fluid can include at least one corrosion inhibitor. Corrosion inhibitors are used to reduce the degradation of metallic parts that are in contact with the heat transfer fluid oil composition. Suitable corrosion inhibitors include aryl thiazines, alkyl substituted dimercaptothiodiazoles, alkyl substituted dimercaptothiadiazoles, and mixtures thereof.

Corrosion inhibitors are additives that protect metal surfaces against chemical attack by water or other contaminants. A wide variety of these are commercially available. As used herein, corrosion inhibitors include antirust additives and metal deactivators.

One type of corrosion inhibitor is a polar compound that wets the metal surface preferentially, protecting it with a film of oil. Another type of corrosion inhibitor absorbs water by incorporating it in a water- in-oil emulsion so that only the oil touches the metal surface. Yet another type of corrosion inhibitor chemically adheres to the metal to produce a non-reactive surface. Examples of suitable additives include zinc dithiophosphates, metal phenolates, basic metal sulfonates, fatty acids and amines. Such additives may be used in an amount of about 0.01 to 5 weight percent, preferably about 0.01 to 1.5 weight percent.

Illustrative corrosion inhibitors include (short-chain) alkenyl succinic acids, partial esters thereof and nitrogen-containing derivatives thereof; and synthetic alkarylsulfonates, such as metal dinonylnaphthalene sulfonates. Corrosion inhbiitors include, for example, monocarboxylic acids which have from 8 to 30 carbon atoms, alkyl or alkenyl succinates or partial esters thereof, hydroxy-fatty acids which have from 12 to 30 carbon atoms and derivatives thereof, sarcosines which have from 8 to 24 carbon atoms and derivatives thereof, amino acids and derivatives thereof, naphthenic acid and derivatives thereof, lanolin fatty acid, mercapto-fatty acids and paraffin oxides.

Particularly preferred corrosion inhibitors are indicated below. Examples of monocarboxylic acids ($C_8$-$C_{30}$), Caprylic acid, pelargonic acid, decanoic acid, undecanoic acid, lauric acid, myristic acid, palmitic acid, stearic acid, arachic acid, behenic acid, cerotic acid, montanic acid, melissic acid, oleic acid, docosanic acid, erucic acid, eicosenic acid, beef tallow fatty acid, soy bean fatty acid, coconut oil fatty acid, linolic acid, linoleic acid, tall oil fatty acid, 12-hydroxy stearic acid, laurylsarcosinic acid, myritsylsarcosinic acid, palmitylsarcosinic acid, stearylsarcosinic acid, oleylsarcosinic acid, alkylated ($C_8$-$C_{20}$) phenoxyacetic acids, lanolin fatty acid and $C_8$-$C_{24}$ mercapto-fatty acids.

Examples of polybasic carboxylic acids which function as corrosion inhibitors include alkenyl ($C_{10}$-$C_{100}$) succinic acids and ester derivatives thereof, dimer acid, N-acyl-N-alkyloxyalkyl aspartic acid esters (U.S. Patent No. 5,275,749). Examples of the alkylamines which function as corrosion inhibitors or as reaction products with the above carboxylates to give amides and the like are represented by primary amines such as laurylamine, coconutamine, n-tridecylamine, myristylamine, n-pentadecylamine, palmitylamine, n-heptadecylamine, stearylamine, n-nonadecylamine, n-eicosylamine, n-heneicosylamine, n-docosylamine, n-tricosylamine, n-pentacosylamine, oleylamine, beef tallow-amine, hydrogenated beef tallow-amine and soy bean-amine. Examples of the secondary amines include dilaurylamine, di-coconut-amine, di-n-tri decyl amine, dimyristylamine, di-n-pentadecylamine, dipalmitylamine, din-pentadecylamine, distearylamine, di-n-nonadecylamine, di-n-eicosylamine, di-n-heneicosylamine, di-n-docosylamine, di-n-tricosylamine, di-n-pentacosyl-amine, dioleylamine, di-beef tallow-amine, di-hydrogenated beef tallow-amine and di-soy bean-amine. Examples of the aforementioned N-alkylpolyalkyenediamines include: ethylenediamines such as laurylethylenediamine, coconut ethylenediamine, n-tridecylethylenediamine-, myristylethylenediamine, n-pentadecylethylenediamine, palmitylethylenediamine, n-heptadecylethylenediamine, stearylethylenediamine, n-nonadecylethylenediamine, n-eicosylethylenediamine, n-heneicosylethylenediamine, n-docosylethylendiamine, n-tricosylethylenediamine, n-pentacosylethylenediamine, oleylethylenediamine, beef tallow-ethylenediamine, hydrogenated beef tallow-ethylenediamine and soy bean-ethylenediamine; propylenediamines such as laurylpropylenediamine, coconut propylenediamine, n-tridecylpropylenediamine, myristylpropylenediamine, n-pentadecylpropylenediamine, palmitylpropylenediamine, n-heptadecylpropylenediamine, stearylpropylenediamine, n-nonadecylpropylenediamine, n-eicosylpropylenediamine, n-heneicosylpropylenediamine, n-docosylpropylendiamine, n-tricosylpropylenediamine, n-pentacosylpropylenediamine, diethylene triamine (DETA) or triethylene tetramine (TETA), oleylpropylenediamine, beef tallow-propylenediamine, hydrogenated beef tallow-propylenediamine and soy bean-propylenediamine; butylenediamines such as laurylbutylenediamine, coconut butylenediamine, n-tridecylbutylenediamine-myristylbutylenediamine, n-pentadecylbutylenediamine, stearylbutylenediamine, n-eicosylbutylenediamine, n-heneicosylbutylenedia-mine, n-docosylbutylendiamine, n-tricosylbutylenediamine, n-pentacosylbutylenediamine, oleylbutylenediamine, beef tallow-butylenediamine, hydrogenated beef tallow -butylenediamine and soy bean butylenediamine; and pentylenediamines such as laurylpentylenediamine, coconut pentylenediamine, myristylpentylenediamine, palmitylpentylenediamine, stearylpentylenediamine, oleyl-pentylenediamine, beef tallow-pentylenediamine, hydrogenated beef tallow -pentylenediamine and soy bean pentylenediamine.

Other illustrative corrosion inhibitors include 2,5-dimercapto-I,3,4-thiadiazoles and derivatives thereof, mercaptobenzothiazoles, alkyl triazoles and benzotriazoles. Examples of dibasic acids useful as corrosion inhibitors, which may be used in the present disclosure, are sebacic acid, adipic acid, azelaic acid, dodecanedioic acid, 3-methyladipic acid, 3-nitrophthalic acid, 1,10-decanedicarboxylic acid, and fumaric acid. The corrosion inhibitors can be a straight or branch-chained, saturated or unsaturated monocarboxylic acid or ester thereof which may optionally be sulphurised in an amount up to 35% by weight. Preferably the acid is a $C_4$ to $C_{22}$ straight chain unsaturated monocarboxylic acid. The preferred concentration of this additive is from 0.001% to 0.35% by weight of the total heat transfer fluid composition. The preferred monocarboxylic acid is sulphurised oleic acid. However, other suitable materials are oleic acid itself; valeric acid and erucic acid. An illustrative corrosion inhibitor includes a triazole as previously defined. The triazole should be used at a concentration from 0.005% to 0.25% by weight of the total composition. The preferred triazole is tolylotriazole which may be included in the compositions of the disclosure include triazoles, thiazoles and certain diamine compounds which are useful as metal deactivators or metal passivators. Examples include triazole, benzotriazole and substituted benzotriazoles such as alkyl substituted derivatives. The alkyl substituent generally contains up to 1.5 carbon atoms, preferably up to 8 carbon atoms. The triazoles may contain other substituents on the aromatic ring such as halogens, nitro, amino, mercapto, etc. Examples of suitable compounds are benzotriazole and the tolyltriazoles, ethylbenzotriazoles, hexylbenzotriazoles, octylbenzotriazoles, chlorobenzotriazoles and nitrobenzotriazoles. Benzotriazole and tolyltriazole are particularly preferred. A straight or branched chain saturated or unsaturated monocarboxylic acid which is optionally sulphurised in an amount which may be up to 35% by weight; or an ester of such an acid; and a triazole or alkyl derivatives thereof, or short chain alkyl of up to 5 carbon atoms; n is zero or an integer between 1 and 3 inclusive; and is hydrogen, morpholino, alkyl, amido, amino, hydroxy or alkyl or aryl substituted derivatives thereof; or a triazole selected from 1,2,4 triazole, 1,2,3 triazole, 5-anilo-1,2,3,4-thiatriazole, 3 -amino- 1,2,4 triazole, 1-H-benzotriazole-I-yl-methylisocyanide, methylene -bis-benzotriazole and naphtho triazole.

The corrosion inhibitors may be used in an amount of 0.01 to 5 wt%, preferably 0.01 to 1.5 wt%, more preferably 0.01 to 0.2 wt%, still more preferably 0.01 to 0.1 wt% (on an as-received basis) based on the total weight of the heat transfer fluid composition.

Antifoam agents may advantageously be added to heat transfer fluid compositions. These agents retard the formation of stable foams. Silicones and organic polymers are typical antifoam agents. For example, polysiloxanes, such as silicon oil or poly dimethyl siloxane, provide antifoam properties. Antifoam agents are commercially available and may be used in conventional minor amounts along with other additives such as demulsifiers; usually the amount of these additives combined is less than 1 weight percent and often less than 0.1 weight percent. In an embodiment, such additives may be used in an amount of about 0.01 to 5 weight percent, preferably 0.1 to 3 weight percent, more preferably about 0.5 to 1.5 weight percent.

The heat transfer fluid may include at least one antiwear agent. Examples of suitable antiwear agents include oil soluble amine salts of phosphorus compounds, sulphurized olefins, metal dihydrocarbyldithio-phosphates (such as zinc dialkyldithiophosphates), thiocarbamate-containing compounds, such as thiocarbamate esters, thiocarbamate amides, thiocarbamic ethers, alkylene-coupled thiocarbamates, and bis(S-alkyldithiocarbamyl) disulphides.

Antiwear agents used in the formulation of the heat transfer fluid may be ashless or ash-forming in nature.

Preferably, the antiwear agent is ashless. So called ashless antiwear agents are materials that form substantially no ash upon combustion. For example, non-metal-containing antiwear agents are considered ashless.

In one embodiment, oil soluble phosphorus amine antiwear agents include an amine salt of a phosphorus acid ester or mixtures thereof. The amine salt of a phosphorus acid ester includes phosphoric acid esters and amine sails thereof; dialkyldithiophosphoric acid esters and amine salts thereof; amine salts of phosphites; and amine salts of phosphorus-containing carboxylic esters, ethers, and amides; and mixtures thereof. The amine salt of a phosphorus acid ester may be used alone or in combination.

In one embodiment, oil soluble phosphorus amine salts include partial amine salt-partial metal salt compounds or mixtures thereof. In one embodiment, the phosphorus compound further includes a sulphur atom in the molecule. In one embodiment, the amine salt of the phosphorus compound may be ashless, i.e., metal-free (prior to being mixed with other components).

The amines which may be suitable for use as the amine salt include primary amines, secondary amines, tertiary amines, and mixtures thereof. The amines include those with at least one hydrocarbyl group, or, in certain embodiments, two or three hydrocarbyl groups. The hydrocarbyl groups may contain 2 to 30 carbon atoms, or in other embodiments 8 to 26, or 10 to 20, or 13 to 19 carbon atoms.

Primary amines include ethylamine, propylamine, butylamine, 2-ethylhexylamine, octylamine, and dodecylamine, as well as such fatty amines as n-octylamine, n-decylamine, n-dodeclyamine, n-tetradecylamine, n-hexadecylamine, n-octadecylamine and oleyamine. Other useful fatty amines include commercially available fatty amines such as "Armeen™" amines (products available from Akzo Chemicals, Chicago, P1.), such as Armeen C, Armeen O, Armeen OL, Armeen T, Armeen HT, Armeen S and Armeen SD, wherein the letter designation relates to the fatty group, such as coco, oleyl, tallow, or stearyl groups.

Examples of suitable secondary amines include dim ethylamine, diethylamine, dipropylamine, dibutylamine, diamylamine, dihexylamine, diheptylamine, methylethylamine, ethylbutylamine and ethylamylamine. The secondary amines may be cyclic amines such as piperidine, piperazine and morpholine.

The amine may also be a tertiary-aliphatic primary amine. The aliphatic group in this case may be an alkyl group containing 2 to 30, or 6 to 26, or 8 to 24 carbon atoms. Tertiary alkyl amines include monoamines such as tert-butylamine, tert-hexylamine, 1 -methyl-1 -amino-cyclohexane, tert-octylamine, tert-decylamine, tertdodecylamine, tert-tetradecylamine, tert-hexadecylamine, tert-octadecylamine, tert-tetracosanylamine, and tert-octacosanylamine.

In one embodiment, the phosphorus acid amine salt includes an amine with $C_{11}$ to $C_{14}$ tertiary alkyl primary groups or mixtures thereof. In one embodiment the phosphorus acid amine salt includes an amine with $C_{14}$ to $C_{18}$ tertiary alkyl primary amines or mixtures thereof. In one embodiment the phosphorus acid amine salt includes an amine with $C_{18}$ to $C_{22}$ tertiary alkyl primary amines or mixtures thereof.

Mixtures of amines may also be used in the disclosure. In one embodiment a useful mixture of amines is "Primene™ 81R" and "Primene™ JMT." Primene™ 81R and Primene™ JMT (both produced and sold by Rohm & Haas) are mixtures of $C_{11}$ to $C_{14}$ tertiary alkyl primary amines and $C_{18}$ to $C_{22}$ tertiary alkyl primary amines respectively.

In one embodiment, oil soluble amine salts of phosphorus compounds include a sulphur-free amine salt of a phosphorus-containing compound may be obtained/obtainable by a process comprising: reacting an amine with either (i) a hydroxy-substituted di-ester of phosphoric acid, or (ii) a phosphorylated hydroxy-substituted di- or tri-ester of phosphoric acid. A more detailed description of compounds of this type is disclosed in International Application PCT/US08/051126.

In one embodiment, the hydrocarbyl amine salt of an alkylphosphoric acid ester is the reaction product of a $C_{14}$ to $C_{18}$ alkylated phosphoric acid with Primene 81RT™ (produced and sold by Rohm & Haas) which is a mixture of $C_{11}$ to $C_{14}$ tertiary alkyl primary amines.

Examples of hydrocarbyl amine salts of dialky Idithiophosphoric acid esters include the reaction product(s) of isopropyl, methyl-amyl (4-methyl-2-pentyl or mixtures thereof), 2-ethylhexyl, heptyl, octyl or nonyl dithiophosphoric acids with ethylene diamine, morpholine, or Primene 81R™, and mixtures thereof.

In one embodiment, the dithiophosphoric acid may be reacted with an epoxide or a glycol. This reaction product is further reacted with a phosphorus acid, anhydride, or lower ester. The epoxide includes an aliphatic epoxide or a styrene oxide. Examples of useful epoxides include ethylene oxide, propylene oxide, butene oxide, octene oxide, dodecene oxide, and styrene oxide. In one embodiment, the epoxide may be propylene oxide. The glycols may be aliphatic glycols having from 1 to 12, or from 2 to 6, or 2 to 3 carbon atoms. The dithiophosphoric acids, glycols, epoxides, inorganic phosphorus reagents and methods of reacting the same are described in U.S. Patent Nos. 3,197,405 and 3,544,465. The resulting acids may then be salted with amines.

The dithiocarbamate-containing compounds may be prepared by reacting a dithiocarbamate acid or salt with an unsaturated compound. The dithiocarbamate containing compounds may also be prepared by simultaneously reacting an amine, carbon disulphide and an unsaturated compound. Generally, the reaction occurs at a temperature from 25°C to 125°C.

Examples of suitable olefins that may be sulphurised to form the sulphurised olefin include propylene, butylene, isobutylene, pentene, hexane, heptene, octane, nonene, decene, undecene, dodecene, undecyl, tridecene, tetradecene, pentadecene, hexadecene, heptadecene, octadecene, octadecenene, nonodecene, eicosene or mixtures thereof. In one embodiment, hexadecene, heptadecene, octadecene, octadecenene, nonodecene, eicosene or mixtures thereof and their dimers, trimers and tetramers are especially useful olefins. Alternatively, the olefin may be a Diels-Alder adduct of a diene such as 1,3 -butadiene and an unsaturated ester, such as, butylacrylate.

Another class of sulphurised olefin includes fatty acids and their esters. The fatty acids are often obtained from vegetable oil or animal oil; and typically contain 4 to 22 carbon atoms. Examples of suitable fatty acids and their esters include triglycerides, oleic acid, linoleic acid, palmitoleic acid or mixtures thereof. Often, the fatty acids are obtained from lard oil, tall oil, peanut oil, soybean oil, cottonseed oil, sunflower seed oil or mixtures thereof. In one embodiment fatty acids and/or ester are mixed with olefins.

Polyols include diols, triols, and alcohols with higher numbers of alcoholic OH groups. Polyhydric alcohols include ethylene glycols, including di-, tri- and tetraethylene glycols; propylene glycols, including di-, tri- and tetrapropylene glycols; glycerol; butane diol; hexane diol; sorbitol; arabitol; mannitol; sucrose; fructose; glucose; cyclohexane diol; erythritol; and penta-erythritols, including di- and tripentaerythritol. Often the polyol is diethylene glycol, triethylene glycol, glycerol, sorbitol, penta erythritol or dipen taerythritol.

In an alternative embodiment, the ashless antiwear agent may be a monoester of a polyol and an aliphatic carboxylic acid, often an acid containing 12 to 24 carbon atoms. Often the monoester of a polyol and an aliphatic carboxylic acid is in the form of a mixture with a sunflower oil or the like, which may be present in the mixture from 5 to 95, in several embodiments from 10 to 90, or from 20 to 85, or 20 to 80 weight percent of said mixture. The aliphatic carboxylic acids (especially a monocarboxylic acid) which form the esters are those acids typically containing 12 to 24, or from 14 to 20 carbon atoms. Examples of carboxylic acids include dodecanoic acid, stearic acid, lauric acid, behenic acid, and oleic acid.

Illustrative antiwear additives useful in this disclosure include, for example, metal salts of a carboxylic acid. The metal is selected from a transition metal and mixtures thereof. The carboxylic acid is selected from an aliphatic carboxylic acid, a cycloaliphatic carboxylic acid, an aromatic carboxylic acid, and mixtures thereof.

The metal is preferably selected from a Group 10, 11 and 12 metal, and mixtures thereof. The carboxylic acid is preferably an aliphatic, saturated, unbranched carboxylic acid having from about 8 to about 26 carbon atoms, and mixtures thereof.

The metal is preferably selected from nickel (Ni), palladium (Pd), platinum (Pt), copper (Cu), silver (Ag), gold (Au), zinc (Zn), and mixtures thereof.

The carboxylic acid is preferably selected from caprylic acid (C8), pelargonic acid (C9), capric acid (C10), undecylic acid (C11), lauric acid (C12), tridecylic acid (C13), myristic acid (C14), pentadecylic acid (C15), palmitic acid (C16), margaric acid (C17), stearic acid (C18), nonadecylic acid (C19), arachidic acid (C20), heneicosylic acid (C21), behenic acid (C22), tricosylic acid (C23), lignoceric acid (C24), pentacosylic acid (C25), cerotic acid (C26), and mixtures thereof.

Preferably, the metal salt of a carboxylic acid comprises zinc stearate, silver stearate, palladium stearate, zinc palmitate, silver palmitate, palladium palmitate, and mixtures thereof. The metal salt of a carboxylic acid can be present in the heat transfer fluid formulations of this disclosure in an amount of from about 0.01 weight percent to about 5 weight percent, based on the total weight of the formulated oil.

A metal alkylthiophosphate and more particularly a metal dialkyl dithio phosphate in which the metal constituent is zinc, or zinc dialkyl dithio phosphate (ZDDP) can be a useful component of the heat transfer fluids of this disclosure. ZDDP can be derived from primary alcohols, secondary alcohols or mixtures thereof. ZDDP compounds generally are of the formula: $Zn[SP(S)(OR^1)(OR^2)]_2$
where $R^1$ and $R^2$ are $C_1$-$C_{18}$ alkyl groups, preferably $C_2$-$C_{12}$ alkyl groups. These alkyl groups may be straight chain or branched. Alcohols used in the ZDDP can be 2-propanol, butanol, secondary butanol, pentanols, hexanols such as 4-methyl-2-pentanol, n-hexanol, n-octanol, 2-ethyl hexanol, alkylated phenols, and the like. Mixtures of secondary alcohols or of primary and secondary alcohol can be preferred. Alkyl aryl groups may also be used.

Preferable zinc dithiophosphates which are commercially available include secondary zinc dithiophosphates such as those available from for example, The Lubrizol Corporation under the trade designations "LZ 677A", "LZ 1095" and "LZ 1371", from for example Chevron Oronite under the trade designation "OLOA 262" and from for example Afton Chemical under the trade designation "HITEC 7169".

The ZDDP is typically used in amounts of from about 0.4 weight percent to about 1.2 weight percent, preferably from about 0.5 weight percent to about 1.0 weight percent, and more preferably from about 0.6 weight percent to about 0.8 weight percent, based on the total weight of the heat transfer fluid, although more or less can often be used advantageously. Preferably, the ZDDP is a secondary ZDDP and present in an amount of from about 0.6 to 1.0 weight percent of the total weight of the heat transfer fluid.

Low phosphorus heat transfer fluid formulations are included in this disclosure. For such formulations, the phosphorus content is typically less than about 0.12 weight percent preferably less than about 0.10 weight percent and most preferably less than about 0.085 weight percent.

Other illustrative antiwear agents useful in this disclosure include, for example, zinc alkyldithiophosphates, aryl phosphates and phosphites, sulfur-containing esters, phosphosulfur compounds, and metal or ash-free dithiocarbamates.

The antiwear additive concentration in the heat transfer fluids of this disclosure can range from about 0.01 to about 5 weight percent, preferably about 0.1 to 4.5 weight percent, and more preferably from about 0.2 weight percent to about 4 weight percent, based on the total weight of the heat transfer fluid.

The heat transfer fluids can include nanomaterials and/or nanoparticles. The nanomaterials and/or nanoparticles can advantageously alter the heat transfer properties of the heat transfer fluids of this disclosure.

The heat transfer fluids of this disclosure can exhibit advantaged heat transfer performance and properties in combination with engineered nanomaterials, nanomaterials, and nanoparticles.

Engineered nanomaterials, also known as nanomaterials, are materials comprising nanoparticles that are small-scale assemblies of atoms and/or molecules and that are produced to have unique/novel properties that are different from those of the corresponding bulk materials.

Nanoparticles are particles having one or more dimensions that are in the size range of about 1 nm to about 100 nm (nm = nanometers). In one aspect, a nanoparticle may be considered to act without consideration of a surrounding interfacial layer. In another aspect, a nanoparticle may be considered to act including the effects of an interfacial layer.

Nanomaterial and nanoparticle compositions comprise, for example, metals, (e.g. Au, Ag, Pd, Pt, Cu, Fe, combinations thereof, and the like), non-metals (e.g. C, B, Si, O, P, N, halides, combinations thereof, and the like), metalloids, metal alloys, intermetallics, conductors, semiconductors, insulators, electroactive materials; optically active, electro-optical, polarizing, polarizable materials; magnetic, ferromagnetic, diamagnetic, electromagnetic, nonmagnetic materials; organics, heteroatom-containing organics, organometallics; inorganics, ceramics, metal oxides (e.g. Ti oxide, Zn oxide, Ce oxides, and the like); salts, complex salts, detergent-metal salt complexes, detergent-metal carbonate complexes, overbased detergent complexes, micellar-metal salt complexes, micellar-metal carbonate complexes, and combinations thereof; single crystal, multi-crystal, multi-crystalline, semi-crystalline, amorphous, semi-amorphous, glassy, combinations thereof, and the like.

Nanomaterials and nanoparticles also include, for example, agglomerated materials, non- agglomerated materials; hydrophobic soluble, insoluble, partially soluble materials; hydrophilic soluble, insoluble, partially soluble materials; fulleranes, fullerenes, functionalized derivatives thereof; carboranes, boranes, borates, boramines; boron-carbon, boron-heteroaatom, boron-metal/metalloid complexes; graphene, functionalized derivatives thereof; single-carbon-atom sheet or multi-sheet materials, functionalized derivatives thereof; single walled, seamless, cylindrical carbon nanotubes, functionalized derivatives thereof; nanotubes and functionalized derivatives thereof, containing e.g. carbon, boron, nitrides, heteroatoms, combinations thereof, and the like; nanotubes and functionalized derivatives thereof, that are e.g. single walled, multi-walled, coaxial, rolled scroll, uncapped, end-capped, and the like; nanowires and functionalized derivatives thereof, containing e.g. carbon, boron, nitrides, heteroatoms, combinations thereof, and the like; quantum dots comprising e.g. semiconductors, Cd selenide, Cd telluride, and the like; molecular sheets, that are e.g. single-layered, multilayered, inter-layered, laminated, rolled, rolled scrolled, folded, intercalated, plates, platelets, and the like; nanowires that are e.g. molecular strings, molecular wires, molecular ropes, molecular cables, coaxial cables, single and multiple wires, coiled, spiraled, interwoven, and the like; core-shell, core-coated, surface modified, surface functionalized; morphologies, in some instances, having aspect ratios that are low in all dimensions, e.g. approaching 1, and in other instances, morphologies having aspect ratios that are high for at least one pair of dimensions, e.g. greater than 1, greater than 5, greater than 10, greater than 50, greater than 100, greater than 500, or even greater than 1000.

Suitable nanomaterials and nanoparticles are prepared for example by synthesis, chemical reactions, nucleation and crystal growth; crystallization, precipitation; complexation; acid-base reactions; solubilization of metal salts, metal oxides, metal carbonates; carboxylic acid-base reactions; carboxylic acid or carboxylate salt solubilization of metal salts, metal oxides, metal carbonates; metal-carboxylate overbasing; detergent metal-carbonate overbasing; liquid deposition; physical processes of milling, grinding, pulverizing, etc. of bulk materials; colloid processes; jet extrusions, aerosoling, vaporization, vapor deposition, ion beam decomposition; physical separations, chemical separations; deconstruction, decomposition, digestion, delamination, intercalation, etc. of bulk materials; combinations thereof, and the like.

Incorporation of nanomaterials and nanoparticles into heat transfer fluids is improved as needed by use of one or more suitable compatibilizing agents, including for example, solvents, dispersants, detergents, overbased detergents, solubilizing agents; complexing agents, complexing agents having electron donating groups including for example, O, S, N, P-O, heteroatom functional groups, anions, and the like; complexing agents having electron accepting groups including for example, metals, metalloids, B, P, Si, cations, alkali and alkaline earth ions, complex cations, and the like; micelles, micellar complexes, micellar-metal salt complexes, detergent-metal salt complexes, overbased detergent complexes; ionic liquids; hydrocarbyl base oils containing for example, aromatics, heteroaromatics, heteroatoms, polar functional groups, polarizable groups and structures, alcohols, ethers, polyethers, esters, polyesters, carbonates, polycarbonates, amines, polyamines, amides, polyamides, ureas, carboxyl groups, carboxylates, combinations thereof, and the like.

Heat transfer fluids containing nanomaterials and nanoparticles may have advantaged performances and properties including, for example, extended service life, improved oxidation stability, improved thermal stability, improved wear protection, improved extreme pressure wear protection, improved cleanliness, controlled friction, controlled thermal conductivity, controlled heat capacity, controlled electrical conductivity.

The nanomaterials and nanoparticles may be used in an amount of 0.01 to 20 wt %, preferably 0.1 to 10 wt %, more preferably 0.5 to 7.5 wt %, still more preferably 1 to 5 wt % (on an as-received basis) based on the total weight of the heat transfer fluid composition.

The formulated heat transfer fluid useful in the present disclosure may additionally contain one or more of the other commonly used heat transfer fluid performance additives including but not limited to dispersants, detergents, viscosity modifiers, metal passivators, ionic liquids, extreme pressure additives, anti-seizure agents, wax modifiers, fluid-loss additives, seal compatibility agents, lubricity agents, anti-staining agents, chromophoric agents, defoamants, demulsifiers, emulsifiers, densifiers, wetting agents, gelling agents, tackiness agents, colorants, and others. For a review of many commonly used additives, see Klamann in Lubricants and Related Products, Verlag Chemie, Deerfield Beach, FL; ISBN 0-89573-177-0; see also U.S. Patent No. 7,704,930, the disclosure of which is incorporated herein in its entirety. These additives are commonly delivered with varying amounts of diluent oil, that may range from 5 weight percent to 50 weight percent.

Kinematic viscosity at 20°C (KV 20) and at 100°C (KV 100) can be measured according to ASTM D445-24.

Boiling points of the heat transfer fluid and the first component, including initial boiling point (IBP) and final boiling point (FBP) can be measured according to ASTM D86-23ae1. For the second component, ASTM D1078-11(2019) is preferred.

Flash point can be measured according to ASTM D93-20.

Test fluids were prepared using Mobil EV™ Therm Elite 701 and 702 fluids as first component, the former being PAO-based and the latter isoparaffinic. Each of the first component was blended with Isopentane (Exxsol Isopentane S) or Isohexane (Exxsol Isohexane) as second component, such that the amount of second component in the blend was from 10 to 40 wt%. Properties of the first and second components are provided in Table 1.

**Table** 1 - Properties of first and second components.

| | 1st Component | | 2nd component | | |
|---|---|---|---|---|---|
| | Mobil EV Therm Elite 701 fluid | Mobil EV Therm Elite 702 fluid | Exxsol Isopentane S | Exxsol Pentane 100 S | Exxsol Isohexane |
| KV 100 (mm$^2$/s) | 1.7 | 0.98 | n/a | n/a | n/a |
| KV 20 (mm$^2$/s) | 9.1 | 3.25 | 0.34 | 0.34 | 0.46 |
| Flash point (°C) | 157 | 96 | -55 | -48 | -36 |
| Inital Boiling point (°C) | 300 | 226 | 27 | 36 | 56 |

Cooling capacity testing showed an increased cooling capacity of the blends where the phase change of the second component occurs. The temperature at which the peak cooling capacity occurs was found to be dependent on both the type of second component (lower boiling points lead to lower peak temperature) and the amount of second component (lower amounts of second component lead to higher peak temperature).

A blend of 20 wt% Isopentane and 80 wt% Mobil EV Therm Elite 701 fluid was compared to pure first component (100% Mobil EV Therm Elite 701) as heat transfer fluid in a setup where a reactor at 80°C and 180°C was cooled via immersion in the fluids. The blend was found to allow for faster cooling of the reactor compared to the pure first component, in particular for the initial cooling rate.

**Reference Numerals**

1       thermal management arrangement
2       electric component
3       housing
4       high-voltage battery
5       cooling circuit
6       fluid line
7       heat exchanger
8       pump

9     expansion tank
10   inlet (housing)
11   outlet (housing)

**Claims**

1. A heat transfer fluid, wherein

   the heat transfer fluid is a dielectric fluid configured to transfer heat in direct contact with live parts,
   the heat transfer fluid comprises

       at least 20 wt% of a first component based on the total weight of the heat transfer fluid, and
       at least 1 wt% and up to 80 wt% of a second component based on the total weight of the heat transfer fluid, wherein

   the first component has

       a kinematic viscosity KV 20 $\leq$ 50.0 mm$^2$/s, preferably $\leq$ 20.0mm$^2$/s, more preferably $\leq$ 10.0mm$^2$/s,
       a kinematic viscosity KV 100 $\leq$ 10.0mm$^2$/s, preferably $\leq$ 5.0mm$^2$/s, more preferably $\leq$ 3.0mm$^2$/s and
       an initial boiling point (IBP) $\geq$ 150 °C, preferably $\geq$ 180 °C, more preferably $\geq$ 200 °C, and

   the second component has

       a kinematic viscosity KV 20 $\leq$ 1.0 mm$^2$/s, preferably $\leq$ 0.7 mm$^2$/s, more preferably $\leq$ 0.5 mm$^2$/s, wherein the KV 20 of the first component is higher than the KV 20 of the second component, and
       a final boiling point (FBP) $\leq$ 100 °C, preferably $\leq$ 80 °C, more preferably $\leq$ 60 °C.

2. The heat transfer fluid of claim 1, wherein
   the difference of the initial boiling point (IBP) of the first component and the final boiling point (FBP) of the second component is $\geq$ 100°C, preferably $\geq$ 120°C, more preferably $\geq$ 150°C.

3. The heat transfer fluid of claims 1 and 2, wherein
   the first component has an initial boiling point (IBP) of from 180 to 400 °C, preferably of from 180 to 350 °C, more preferably of from 200 to 320 °C and a final boiling point (FBP) of from 200 to 450 °C, preferably of from 210 to 400 °C, more preferably of from 220 to 350 °C.

4. The heat transfer fluid of any of the proceeding claims, comprising at least 40 wt% of the first component and from 30 wt% to 60 wt% of the second component based on the total weight of the heat transfer fluid.

5. The heat transfer fluid of any of the proceeding claims, wherein the first component has a KV 20 $\leq$ 10.0 mm$^2$/s and a KV 100 $\leq$ 3.0 mm$^2$/s.

6. The heat transfer fluid of any of the proceeding claims, wherein the first component has a KV 20 > 1.0 mm$^2$/s.

7. The heat transfer fluid of any of the proceeding claims, wherein
   the second component has an initial boiling point (IBP) of from 10 to 90 °C, preferably of from 20 to 80 °C, more preferably of from 25 to 60 °C and a final boiling point (FBP) of from 20 to 100 °C, preferably of from 25 to 80 °C, more preferably of from 30 to 60 °C.

8. The heat transfer fluid of any of the proceeding claims, wherein
   the first component comprises less than 5 wt%, preferably less than 3 wt%, more preferably less than 1 wt% of halogen atoms based on the total weight of the second component, in particular the first component is essentially free from halogen atoms; and the second component comprises less than 3 wt%, preferably less than 1 wt%, more preferably less than 0.5 wt% of halogen atoms based on the total weight of the second component, in particular the second component is essentially free from halogen atoms.

9. The heat transfer fluid of any of the proceeding claims, wherein
   the first component has a flash point of from 50 to 400 °C, preferably of from 70 to 300 °C, more preferably of from 80 to 200 °C.

10. The heat transfer fluid of any of the proceeding claims, wherein
the second component comprises one or more hydrocarbons selected from the group consisting of acyclic saturated hydrocarbons, cyclic saturated hydrocarbons, acyclic unsaturated hydrocarbons, cyclic unsaturated hydrocarbons, aromatic hydrocarbons, oxygenated derivatives thereof and combinations thereof.

11. The heat transfer fluid of any of the proceeding claims, wherein
the second component has a flash point of from -100 to 0 °C, preferably of from -70 to -20 °C, more preferably of from -60 to -30 °C.

12. The heat transfer fluid of any of the proceeding claims, wherein
the heat transfer fluid comprises less than 5 wt%, preferably less than 3 wt%, more preferably less than 1 wt% of halogen atoms based on the total weight of the heat transfer fluid, in particular the heat transfer fluid is essentially free from halogen atoms.

13. The heat transfer fluid for electric vehicle applications of any of the proceeding claims, wherein
the heat transfer fluid has a flash point of from -100 to 400 °C, preferably of from -70 to 300 °C, more preferably of from -60 to 200 °C.

14. Use of the heat transfer fluid of any of the proceeding claims in an electric vehicle application comprising battery thermal management, electric motor cooling and passenger cell AC.

15. Use of the heat transfer fluid of any of claims 1 to 13 for cooling electronics, computers, server banks, or data centers.

Fig. 1

Fig. 2

Europäisches
Patentamt

European
Patent Office

Office européen
des brevets

# EUROPEAN SEARCH REPORT

**Application Number**

EP 24 20 1413

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 050 734 A (FUSI LUBRICATING OIL CHINA CO LTD) 14 November 2023 (2023-11-14) * paragraphs [0001] - [0003], [0017] - [0020]; claims * ----- | 1-15 | INV. C09K5/04 H01M10/6569 C10M101/00 |
| X | US 2021/292628 A1 (PRENTICE GILES MICHAEL DEREK [GB] ET AL) 23 September 2021 (2021-09-23) * paragraphs [0033], [0047], [0058] - [0063]; claims * ----- | 1-15 | |
| X | WO 2020/216690 A1 (BP PLC [GB]) 29 October 2020 (2020-10-29) * paragraphs [0017], [0024] - [0027], [0056]; claims * ----- | 1-15 | |

|  |
|---|
| TECHNICAL FIELDS SEARCHED (IPC) |
| C09K H01M C10M |

The present search report has been drawn up for all claims

| Place of search | Date of completion of the search | Examiner |
|---|---|---|
| The Hague | 7 February 2025 | Martinez Marcos, V |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

    ..........................................................................................
& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 24 20 1413

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2025

| Patent document cited in search report | | Publication date | Patent family member(s) | | Publication date |
|---|---|---|---|---|---|
| CN 117050734 | A | 14-11-2023 | NONE | | |
| US 2021292628 | A1 | 23-09-2021 | CN | 112513221 A | 16-03-2021 |
| | | | EP | 3818127 A1 | 12-05-2021 |
| | | | JP | 2021529223 A | 28-10-2021 |
| | | | KR | 20210031425 A | 19-03-2021 |
| | | | US | 2021292628 A1 | 23-09-2021 |
| | | | WO | 2020007954 A1 | 09-01-2020 |
| WO 2020216690 | A1 | 29-10-2020 | CN | 113840894 A | 24-12-2021 |
| | | | EP | 3959285 A1 | 02-03-2022 |
| | | | JP | 7590980 B2 | 27-11-2024 |
| | | | JP | 2022529905 A | 27-06-2022 |
| | | | KR | 20220002409 A | 06-01-2022 |
| | | | US | 2022228047 A1 | 21-07-2022 |
| | | | WO | 2020216690 A1 | 29-10-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011105366 A1
- WO 2020007954 A1
- WO 2020007954 A
- US 4956122 A
- US 4827064 A
- US 4827073 A
- US 4149178 A
- US 3382291 A
- US 3742082 A
- US 3769363 A
- US 3876720 A
- US 4239930 A
- US 4367352 A
- US 4413156 A
- US 4434408 A
- US 4910355 A
- US 5068487 A
- US 4218330 A
- US 5075269 A
- US 2817693 A
- US 4975177 A
- US 4921594 A
- US 4897178 A
- GB 1429494 A
- GB 1350257 A
- GB 1440230 A
- GB 1390359 A
- EP 464546 A
- EP 464547 A
- US 4594172 A
- US 4943672 A
- US 6080301 A
- US 6090989 A
- US 6165949 A
- US 4798684 A
- US 5084197 A
- US 8048833 B
- US 5275749 A
- US 08051126 W
- US 3197405 A
- US 3544465 A
- US 7704930 B

**Non-patent literature cited in the description**

- Friedel-Crafts and Related Reactions. Inter-science Publishers, 1963
- Friedel-Crafts and Related Reactions. Inter-science Publishers, 1964, vol. 2
- **KLAMANN**. Lubricants and Related Products. Verlag Chemie